(19) Europäisches Patentamt

European Patent Office

Office européen des brevets

(11) **EP 4 338 983 B1**

(12) **EUROPEAN PATENT SPECIFICATION**

(45) Date of publication and mention
of the grant of the patent:
**19.11.2025 Bulletin 2025/47**

(21) Application number: **23193413.4**

(22) Date of filing: **25.08.2023**

(51) International Patent Classification (IPC):
**B60C 9/22** *(2006.01)*        **B60C 11/00** *(2006.01)*

(52) Cooperative Patent Classification (CPC):
**B60C 9/2204;** B60C 2009/2209; B60C 2009/2214;
B60C 2009/2261; B60C 2009/228;
B60C 2011/0025; B60C 2011/0033

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.09.2022 JP 2022146398**

(43) Date of publication of application:
**20.03.2024 Bulletin 2024/12**

(73) Proprietor: **Sumitomo Rubber Industries, Ltd.
Kobe-shi, Hyogo 651-0072 (JP)**

(72) Inventors:
• **OKABE, Noboru**
**Kobe-shi, Hyogo, 651-0072 (JP)**
• **MIKI, Takashi**
**Kobe-shi, Hyogo, 651-0072 (JP)**
• **MISEKI, Yuta**
**Kobe-shi, Hyogo, 651-0072 (JP)**

(74) Representative: **Manitz Finsterwald
Patent- und Rechtsanwaltspartnerschaft mbB
Martin-Greif-Straße 1
80336 München (DE)**

(56) References cited:
EP-A1- 1 671 813        WO-A1-2021/065983
DE-A1- 102010 036 760        US-A1- 2022 266 632

**Description**

TECHNICAL FIELD

The present invention relates to a tire.

BACKGROUND ART

A variety of techniques have been proposed to improve various tire properties. In recent years, it has become desirable to improve durability during high-speed driving in particular. A tire according to the preamble of claim 1 is known from US 2022/266632 A1.

Other prior art is known from WO 2021/065983 A1, EP 1 671 813 A1 and DE 10 2010 036760 A1.

SUMMARY OF INVENTION

TECHNICAL PROBLEM

The present invention aims to solve the above problem and provide a tire with excellent durability during high-speed driving.

SOLUTION TO PROBLEM

The present invention relates to a tire, including a cap tread and a band layer containing a polyethylene terephthalate fiber cord, the polyethylene terephthalate fiber cord in the band layer having a residual strain E in the band layer of 2.0% or higher, the polyethylene terephthalate fiber cord taken out of the band layer having a stress-strain curve at 100°C in which a slope d at the residual strain E in the band layer is 2.0 cN/(tex·%) or greater, the tire satisfying the following relationship (1):

$$(1) \quad E \times d / \tan\delta t > 30$$

where E (%) is the residual strain as defined above, d (cN/(tex·%)) is the slope as defined above, and $\tan\delta t$ is a loss tangent of the cap tread measured at a temperature of 30°C, an initial strain of 10%, a dynamic strain of 1%, and a frequency of 10 Hz in extension mode.

ADVANTAGEOUS EFFECTS OF INVENTION

The tire according to the present invention includes a cap tread and a band layer containing a polyethylene terephthalate fiber cord, wherein the polyethylene terephthalate fiber cord in the band layer has a residual strain E in the band layer of 2.0% or higher, the polyethylene terephthalate fiber cord taken out of the band layer has a stress-strain curve at 100°C in which the slope d at the residual strain E in the band layer is 2.0 cN/(tex·%) or greater, and the tire satisfies relationship (1). Thus, the present invention can provide a tire with excellent durability during high-speed driving.

BRIEF DESCRIPTION OF DRAWINGS

FIG. 1 shows a cross-sectional view of a tire according to the present invention.
FIG. 2 shows an enlarged cross-sectional view of the belt layer and the band layer in FIG. 1.
FIG. 3 shows an enlarged cross-sectional view of a tread portion.

DESCRIPTION OF EMBODIMENTS

The present invention relates to a tire including a cap tread and a band layer containing a polyethylene terephthalate fiber cord, wherein the polyethylene terephthalate fiber cord in the band layer has a residual strain E in the band layer of 2.0% or higher, the polyethylene terephthalate fiber cord taken out of the band layer has a stress-strain curve at 100°C in which the slope d at the residual strain E in the band layer is 2.0 cN/(tex·%) or greater, and the tire satisfies relationship (1).

The reason for the above-mentioned advantageous effect is not exactly clear, but it is assumed to be due to the following mechanism.

Centrifugal force and radially outward force caused by the internal air pressure are applied to the tire during high-speed driving. When a polyethylene terephthalate fiber cord to which a residual strain E of 2.0% or higher has previously been applied is placed in the band layer, more tension may occur in the band portion, making it easier to reduce deformation of the tire.

Moreover, the tread temperature rises to around 100°C during high-speed driving. Thus, when in the stress-strain curve measured at this temperature, the slope d at the residual strain applied to the polyethylene terephthalate fiber cord in the band layer is adjusted to 2.0 cN/(tex·%) or greater, the placement of the polyethylene terephthalate fiber cord to which a residual strain E of 2.0% or higher has been applied and the adjustment of the slope d to the predetermined value or greater may act cooperatively to facilitate tightening of the tread portion.

Furthermore, when the residual strain E and slope d in the band layer are increased relative to the loss tangent at 30°C of the cap tread (tanδt) so that the residual strain E, the slope d, and the loss tangent of the cap tread satisfy "E×d/tanδt > 30" in order to sufficiently increase restraining force, sufficient restraining force may be obtained even when the temperature rises during high-speed driving. The above-described effects are assumed to act cooperatively to synergistically improve durability during high-speed driving.

As discussed above, the present invention solves the problem (purpose) of improving durability during high-speed driving by formulating a tire that includes a band layer and a cap tread and satisfies "E of 2.0% or higher", "d of 2.0 cN/(tex·%) or greater" and "E×d/tanδt > 30". In other words, the parameters: "E of 2.0% or higher", "d of 2.0 cN/(tex·%) or greater", and "E×d/tanδt > 30" do not define the problem (purpose), and the problem herein is to improve durability during high-speed driving. In order to solve this problem, the tire has been formulated to satisfy the parameters.

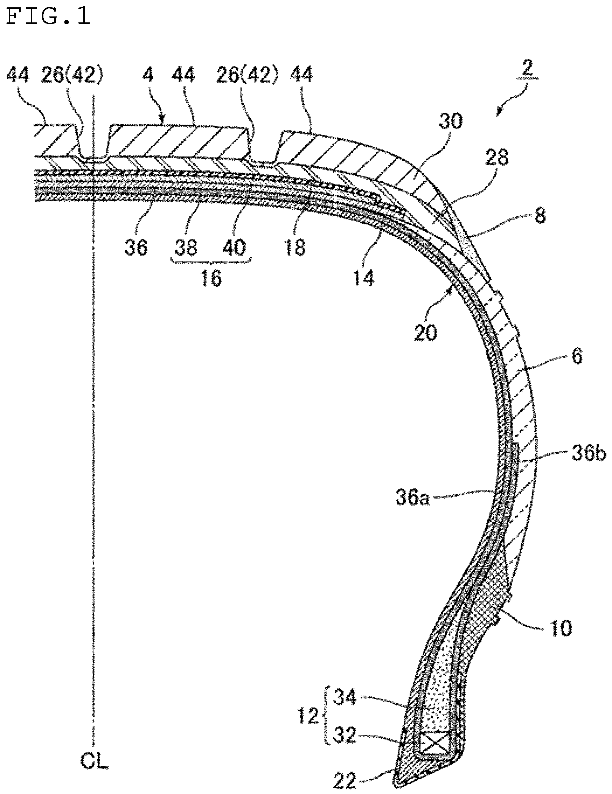

FIG. 1 shows a meridional cross-sectional view of a tire 2 according to the present embodiment in the normal state, including the axis of rotation of the tire.

Herein, the dimensions of the parts of the tire are measured for the tire in the normal state, unless otherwise stated.

Herein, the term "normal state" refers to a state where the tire is mounted on a normal rim (not shown), inflated to a normal internal pressure, and under no load.

If measurement of the tire mounted on a normal rim is impossible, the dimensions and angles of the parts of the tire in a meridional cross-section of the tire are measured in a cross-section of the tire cut along a plane including the axis of rotation, in which the distance between the right and left beads corresponds to the distance between the beads in the tire mounted on a normal rim.

The term "normal rim" refers to a rim specified for each tire by the standard in a standard system including standards according to which tires are provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard in a standard system including standards according to which tires are provided, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

Also herein, the term "normal load" refers to a load specified for each tire by the standard in a standard system including standards according to which tires are provided, and may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equations.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume (mm$^3$) of tire
Dt: outer diameter (mm) of tire
Ht: cross-sectional height (mm) of tire
Wt: cross-sectional width (mm) of tire

The term "outer diameter Dt (mm)" of the tire refers to the outer diameter of the tire in the normal state.

The term "cross-sectional height Ht (mm)" of the tire refers to the height in the tire radial direction in a radial cross-section of the tire. Provided that the rim diameter of the tire is R (mm), the height corresponds to half of the difference between the outer diameter Dt of the tire and the rim diameter R. In other words, the cross-sectional height Ht can be determined by (Dt - R)/2.

In FIG. 1, the vertical direction corresponds to the radial direction of the tire 2, the horizontal direction corresponds to the axial direction of the tire 2, and the direction perpendicular to the paper corresponds to the circumferential direction of the tire 2. A tread portion 4 includes a cap layer 30 (hereinafter, also referred to as cap tread) and a base layer 28.

Although FIG. 1 shows an example of a two-layered tread portion 4 consisting of a cap layer 30 and a base layer 28, the tread portion 4 may include a single-layered tread portion or a three or more-layered tread portion.

The tire of the present invention includes a cap tread. Herein, the term "cap tread" refers to the outermost surface rubber layer of a tread portion with respect to the tire radial direction. For example, for a single-layered tread portion, the cap tread corresponds to the entire tread portion; for a two-layered tread portion consisting of a cap layer and a base layer, it corresponds to the outermost surface cap layer with respect to the tire radial direction; and for a three or more-layered tread portion, it corresponds to the outermost surface rubber layer with respect to the tire radial direction among the three or more rubber layers.

In the tire 2, each sidewall 6 extends radially substantially inwardly from the end of the tread portion 4. The radially outer portion of the sidewall 6 is bonded to the tread portion 4. The radially inner portion of the sidewall 6 is bonded to a clinch 10. The sidewall 6 can prevent damage to a carcass 14.

In FIG. 1, each wing 8 is located between the tread portion 4 and the sidewall 6. The wing 8 is bonded to both the tread portion 4 and the sidewall 6.

Each clinch 10 is located radially substantially inward of the sidewall 6 and has at least one part that contacts a rim.

The carcass 14 includes a carcass ply 36. Although the carcass 14 in this tire 2 includes one carcass ply 36, it may include two or more carcass plies.

In this tire 2, the carcass ply 36 extends between bead cores 32 on opposite sides along the tread portion 4 and the sidewalls 6. The carcass ply 36 is folded around each bead core 32 from the inside to the outside in the axial direction. The thus folded carcass ply 36 is provided with a main portion 36a and a pair of folded portions 36b. Namely, the carcass ply 36 includes a main portion 36a and a pair of folded portions 36b.

Each bead core 32 includes a bead apex 34 that extends radially outwardly from the bead core 32. The bead core 32 desirably has a ring shape and contains a wound non-stretchable wire. The bead apex 34 is radially outwardly tapered.

The carcass ply 36 desirably consists of a parallel array of cords and a topping rubber. The absolute value of the angle of each cord with respect to the equator is suitably from 75° to 90°. In other words, the carcass 14 preferably has a radial structure.

In FIG. 1, a belt layer 16 is located radially inward of the tread portion 4. The belt layer 16 is stacked on the carcass 14. The belt layer 16 reinforces the carcass 14. In the tire 2 of FIG. 1, the belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times, but preferably not more than 0.9 times the cross-sectional width of the tire 2. Although the tire 2 shown in FIG. 1 includes a two-layered belt layer including an interior layer 38 and an exterior layer 40, the tire may include either a single-layered belt layer or a two or more-layered belt layer.

Here, the term "cross-sectional width of the tire" refers to the width of the tire mounted on a normal rim with an internal pressure equal to atmospheric pressure, as determined by excluding the patterns, letters, and the like on the sides of the tire from the linear distance between the sidewalls (the total width of the tire) including all the patterns, letters, and the like on the sides of the tire.

In FIG. 1, a band layer 18 is located radially outward of the belt layer 16. The band layer 18 has an axial width that is equal to that of the belt layer 16. The band layer 18 may have a larger width than the belt layer 16.

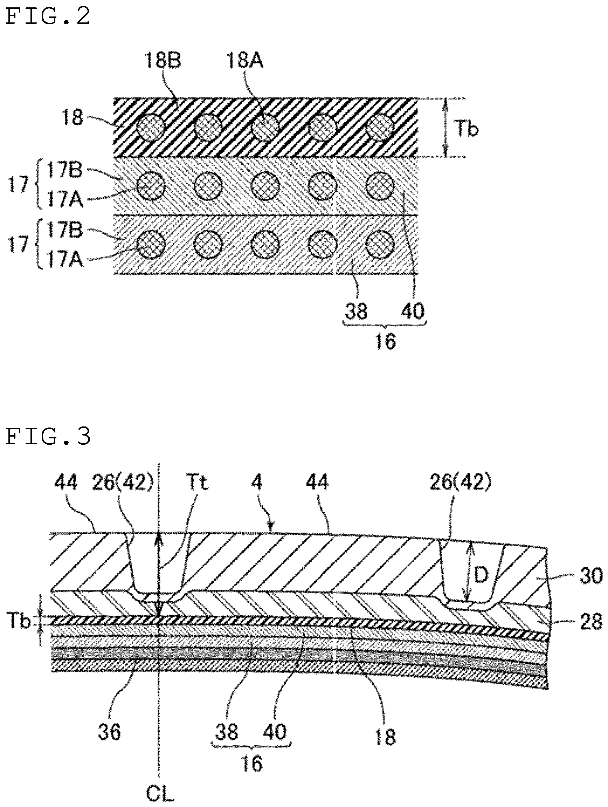

FIG. 2 shows an enlarged cross-sectional view of a belt layer 16 including an interior layer 38 and an exterior layer 40 and a band layer 18.

Belt plies 17 forming the interior layer 38 and the exterior layer 40 each desirably consist of a parallel array of belt cords 17A and a topping rubber 17B. In other words, the belt layer 16 contains a parallel array of cords. Each cord is inclined with respect to the equator. The absolute value of the inclination angle is generally at least 10° but not greater than 35°. The inclination direction of the cord in the interior layer 38 with respect to the equator is opposite to the inclination direction of the cord in the exterior layer 40 with respect to the equator.

The band layer 18 desirably consists of a polyethylene terephthalate fiber cord and a topping rubber (coating rubber). The polyethylene terephthalate fiber cord is spirally wound. This band layer 18 has what is called a jointless structure. The cord extends substantially in the circumferential direction. The angle of the cord with respect to the circumferential direction is preferably 5° or smaller or even 2° or smaller. The cord restricts the belt layer 16, thereby inhibiting lifting of the belt layer 16.

The band layer 18 in the tire 2 can enhance the restraint of each belt ply 17 to enhance durability during high-speed driving and can also impart good ride quality.

The band layer 18 includes a polyethylene terephthalate fiber cord 18A and a reinforcing rubber 18B coating the polyethylene terephthalate fiber cord 18A. Here, the polyethylene terephthalate fiber cord has usually been subjected to dipping treatment to improve adhesion to the rubber.

The polyethylene terephthalate fiber cord 18A in the band layer 18 is desirably inclined at an angle of 0 to 5 degrees with respect to the tire circumferential direction, for example. The band layer 18 desirably includes a full cover layer which entirely covers the belt ply 17. The band layer 18 may also have a structure (two or more-layered structure) that includes, in addition to the full cover layer, a pair of edge cover layers which locally cover both ends of the belt ply 17. The band layer 18 may be formed of a material strip spirally wound in the tire circumferential direction, where the material strip is prepared by aligning at least one polyethylene terephthalate fiber cord 18A and coating the array of cords with a coating rubber. In particular, it desirably has a jointless structure.

The polyethylene terephthalate fiber cord 18A in the band layer 18 of the tire 2 has a residual strain E of 2.0% or higher when it is placed in the band layer 18. The residual strain E is preferably 2.5% or higher, more preferably 2.6% or higher, still more preferably 2.8% or higher, further preferably 3.5% or higher, further preferably 3.8% or higher, further preferably 4.0% or higher, particularly preferably 4.5% or higher. The upper limit of E is not limited, and it is preferably 10.0% or lower, more preferably 7.0% or lower, still more preferably 5.0% or lower, particularly preferably 4.8% or lower. When the residual strain E is within the range indicated above, the advantageous effect tends to be suitably achieved.

The polyethylene terephthalate fiber cord 18A taken out of the band layer 18 of the tire 2 has a stress-strain curve at 100°C in which the slope d at the residual strain E of the polyethylene terephthalate fiber cord 18A placed in the band layer 18 of the tire 2 is 2.0 cN/(tex·%) or greater. The slope d is preferably 2.1 cN/(tex·%) or greater, more preferably 2.5 cN/(tex·%) or greater, still more preferably 2.6 cN/(tex·%) or greater, further preferably 2.7 cN/(tex·%) or greater, further preferably 2.8 cN/(tex·%) or greater, further preferably 3.1 cN/(tex·%) or greater, particularly preferably 3.6 cN/(tex·%) or greater. The upper limit of d is not limited, and it is preferably 6.0 cN/(tex·%) or less, more preferably 5.5 cN/(tex·%) or less, still more preferably 5.4 cN/(tex·%) or less, further preferably 5.0 cN/(tex·%) or less, further preferably 4.8 cN/(tex·%) or less, further preferably 4.0 cN/(tex·%) or less. When the slope d is within the range indicated above, the advantageous effect tends to be suitably achieved.

The band layer 18 and the cap layer 30 (corresponding to a cap tread) of the tread portion 4 in the tire 2 satisfy the following relationship (1):

$$(1) \quad E \times d / \tan\delta t > 30$$

where E (%) is the residual strain as defined above, d (cN/(tex·%)) is the slope as defined above, and $\tan\delta t$ is the loss tangent of the cap layer 30 measured at a temperature of 30°C, an initial strain of 10%, a dynamic strain of 1%, and a frequency of 10 Hz in extension mode.

The value on the right side of relationship (1) is preferably 31, more preferably 32, still more preferably 34, further preferably 35, further preferably 51, further preferably 54, further preferably 70, further preferably 80, further preferably 95, further preferably 106, particularly preferably 110, most preferably 130. The upper limit of the value of $E \times d / \tan\delta t$ is not limited, and it is preferably 200 or less, more preferably 180 or less, still more preferably 160 or less, further preferably 148 or less, particularly preferably 145 or less. When the value is within the range indicated above, the advantageous effect tends to be suitably achieved.

The $\tan\delta t$ of the cap layer 30 of the tire 2 is preferably less than 0.35, more preferably less than 0.27, still more preferably less than 0.25, further preferably less than 0.20, particularly preferably less than 0.18. The lower limit of $\tan\delta t$ is not limited, and it is preferably 0.05 or more, more preferably 0.08 or more, still more preferably 0.09 or more, further preferably 0.10 or more, further preferably 0.13 or more. When the $\tan\delta t$ is within the range indicated above, the advantageous effect tends to be suitably achieved.

In the present invention, the "residual strain E of the polyethylene terephthalate fiber cord in the band layer" is measured by the following method.

The tread portion is removed from the tire to expose the inner band layer.

The polyethylene terephthalate fiber cord in the band layer is marked at predetermined lengths, such as 50 mm.

A non-stretchable tape is attached along the marked polyethylene terephthalate fiber cord to transfer the marks to the non-stretchable tape.

The marked polyethylene terephthalate fiber cord is pulled out of the tire, and the residual strain E is calculated based on the distance between the marks on the pulled-out polyethylene terephthalate fiber cord and the distance between the corresponding marks transferred to the non-stretchable tape using the following equation:

$$\text{Residual strain E (\%)} = ((X - Y)/Y) \times 100$$

where X is the distance between the marks on the non-stretchable tape to which the marks are transferred, and Y is the distance between the marks on the pulled-out polyethylene terephthalate fiber cord.

The "slope d at the residual strain E in the band layer in the stress-strain curve at 100°C of the polyethylene terephthalate fiber cord taken out of the band layer" is determined by drawing a load-elongation curve at 100°C as described in the measurement of the initial tensile resistance set forth in JIS L 1017, and determining the slope of a tangent line at the residual strain E of the polyethylene terephthalate fiber cord in the belt layer.

The "$\tan \delta t$" is the loss tangent of the cap tread measured at a temperature of 30°C, an initial strain of 10%, a dynamic strain of 1%, and a frequency of 10 Hz in extension mode using EPLEXOR series available from GABO.

The residual strain E of the polyethylene terephthalate fiber cord in the band layer can be controlled, for example, by applying a predetermined tension to the polyethylene terephthalate fiber cord and building a tire with the cord in which strain remains. The amount of residual strain can be controlled by varying the tension.

The loss tangent $\tan \delta$ can be controlled by the types and amounts of the chemicals (in particular, rubber components, fillers, softeners, resins, sulfur, vulcanization accelerators, silane coupling agents) blended in the composition. The $\tan \delta$ tends to be increased, for example, by using a softener (e.g., resin) with low compatibility with rubber components; using an unmodified polymer; increasing the amount of fillers; increasing the amount of plasticizer oils; reducing the amount of sulfur; reducing the amount of vulcanization accelerators; or reducing the amount of silane coupling agents.

To better achieve the advantageous effect, the polyethylene terephthalate fiber cord 18A taken out of the band layer 18 of the tire 2 desirably has a stress at 2.5% elongation at 25°C of 20.1 cN/tex or less. The stress at 2.5% elongation is preferably 18.3 cN/tex or less, more preferably 18.0 cN/tex or less, still more preferably 13.0 cN/tex or less, further preferably 10.0 cN/tex or less, particularly preferably 9.7 cN/tex or less. The lower limit is not limited, and it is preferably 5.0 cN/tex or more, more preferably 5.5 cN/tex or more, still more preferably 6.0 cN/tex or more, particularly preferably 6.5 cN/tex or more. When the stress at 2.5% elongation is within the range indicated above, the advantageous effect tends to be suitably achieved.

To better achieve the advantageous effect, the polyethylene terephthalate fiber cord 18A taken out of the band layer 18 of the tire 2 desirably has a stress at 5.0% elongation at 25°C of 39.2 cN/tex or less. The stress at 5.0% elongation is preferably 36.0 cN/tex or less, more preferably 33.0 cN/tex or less, still more preferably 25.0 cN/tex or less, further preferably 23.0 cN/tex or less, particularly preferably 22.7 cN/tex or less. The lower limit is not limited, and it is preferably 10.0 cN/tex or more, more preferably 15.0 cN/tex or more, still more preferably 17.0 cN/tex or more, particularly preferably 19.0 cN/tex or more. When the stress at 5.0% elongation is within the range indicated above, the advantageous effect tends to be suitably achieved.

The mechanism by which the advantageous effect can be better achieved by adjusting the stress at 2.5% or 5.0% elongation to a predetermined value or less is not clear, but it is assumed as follows.

Adjusting the residual strain in the tire to 2.0% or higher requires applying tensile strain to the band cord in the production of the tire. Since there will be a loss of the applied tensile strain due to the heat during vulcanization, the tensile strain to be applied needs to be somewhat larger than the target residual strain.

Meanwhile, if too much stress occurs in the cord when tensile strain is applied during the production, the distance between the band cord and the breaker cord may be reduced. This can cause the cords to come into contact with each other upon deformation induced by driving, thereby causing tire damage due to band breakage. Such damage can be prevented by satisfying relationship (1) while adjusting the stress at elongation to a predetermined value or less. Accordingly, it is assumed that durability during high-speed driving can be improved significantly.

In the present invention, the "stress at 2.5% elongation at 25°C and stress at 5.0% elongation at 25°C of the polyethylene terephthalate fiber cord taken out of the band layer" are measured as follows.

The tread portion is removed from the tire to expose the inner band layer.

The polyethylene terephthalate fiber cord is taken out of the band layer with great care to avoid damage to the cord, and the unnecessary rubber attached to the cord is carefully scraped off with scissors, followed by drawing a tensile load (cN)-elongation (%) curve at a temperature of 25 ± 2°C using an autograph (Shimadzu Corporation) in accordance with JIS L 1017.

The actual load at 2.5% elongation and the actual load at 5.0% elongation are determined from the load-elongation curve.

The determined loads are each divided by the total tex before the pulling of the cord to determine the stress value (cN/dtex).

The polyethylene terephthalate fiber cord 18A placed in the band layer 18 of the tire 2 preferably has a twist number of 35 t/10 cm or more, more preferably 40 t/10 cm or more, still more preferably 48 t/10 cm or more, particularly preferably 50 t/10 cm or more. The upper limit of the twist number is preferably 70 t/10 cm or less, more preferably 65 t/10 cm or less, still more preferably 60 t/10 cm or less. When the twist number is within the range indicated above, the advantageous effect can be suitably achieved.

Here, the twist number is determined for the cord after dipping treatment.

The polyethylene terephthalate fiber cord 18A placed in the band layer 18 of the tire 2 preferably has a total fineness of 100 tex or more, more preferably 220 tex or more, still more preferably 250 tex or more, particularly preferably 288 tex or more. The upper limit of the total fineness is preferably 1000 tex or less, more preferably 700 tex or less, still more preferably 500 tex or less. When the total fineness is within the range indicated above, the advantageous effect can be suitably achieved.

Here, the total fineness is determined for the cord after dipping treatment.

The number of cords (ends, end count) per 50 mm width in the tire axial direction of the polyethylene terephthalate fiber cord 18A placed in the band layer 18 of the tire 2 is preferably 34 or more, more preferably 40 or more, still more preferably 45 or more, particularly preferably 50 or more. The upper limit is preferably 78 or less, more preferably 65 or less, still more preferably 60 or less. When the number of cords is within the range indicated above, the advantageous effect can be suitably achieved.

Here, the number of cords (ends, end count) of the polyethylene terephthalate fiber cord 18A can be determined by counting the number of reinforcing materials aligned within the range of $\pm$ 50 mm in the tire width direction from the equator in a radial cross-section of the tire, with the width between the bead portions being adjusted to the normal rim width, followed by calculating the number per 50 mm.

The polyethylene terephthalate fiber cord 18A is preferably aligned at an angle within $\pm$ 10° with respect to the tire circumferential direction, for example. This can enhance restraint in the tire circumferential direction to improve durability. Although the polyethylene terephthalate fiber cord 18A in the present embodiment has a circular transverse section, it is not limited to a circular shape and may have other shapes, such as an oval or polygonal shape in transverse section.

The polyethylene terephthalate (PET) fibers of the polyethylene terephthalate fiber cord 18A may be synthetic fibers or biomass-derived fibers. Also, in view of life cycle assessment, they are desirably derived from a recycled or reclaimed material. The fibers may also be formed of a single component including synthetic fibers, biomass fibers, or recycled or reclaimed fibers. Also usable are hybrid cords obtained by intertwining these fibers, multifilament cords obtained by combining the respective filaments, and cords with a chemical structure in which the respective components are chemically bound to each other.

The cord(s) placed in the band layer 18 of the tire 2 may include only the polyethylene terephthalate fiber cord (PET cord) or may further include an additional cord. Examples of the additional cord include organic fiber cords such as polyamide fibers and cellulose fibers. When the cords include an additional cord, the polyethylene terephthalate fiber cord and the additional cord may be placed separately or in the form of a hybrid cord of the polyethylene terephthalate fiber cord and the additional cord in the band layer 18.

When the PET cord is a biomass-derived PET cord, it may suitably be, for example, a biomass PET cord formed from biomass-derived terephthalic acid or ethylene glycol.

The biomass PET cord can be formed from biomass terephthalic acid, biomass ethylene glycol, etc. which are produced by converting bioethanol or furfurals, carenes, cymenes, terpenes, etc., or converting various animal- or plant-derived compounds, or directly fermenting microorganisms or the like.

Examples of the polyamide fibers include aliphatic polyamides, semi-aromatic polyamides, and fully aromatic polyamides.

Aliphatic polyamides refer to polyamides having a backbone in which straight carbon chains are connected via amide bonds. Examples include Nylon 4 (PA4), Nylon 410 (PA410), Nylon 6 (PA6), Nylon 66 (PA66), Nylon 610 (PA610), Nylon 10 (PA10), Nylon 1010 (PA1010), Nylon 1012 (PA1012), and Nylon 11 (PA11). Among these are Nylon 4, Nylon 410, Nylon 610, Nylon 10, Nylon 1010, Nylon 11, etc. which can be easily formed partially or fully from biomass-derived materials.

Examples of Nylon 6 and Nylon 66 include those which are produced by ring-opening polymerization of conventional chemically synthesized caprolactam and those which are produced by condensation polymerization of hexamethylenediamine and adipic acid. Other examples include Nylon 6 and Nylon 66 produced from bio-caprolactam, or bio-adipic acid and bio-hexamethylenediamine, made from bio-derived cyclohexane as a starting material. Moreover, the above-mentioned biological raw materials may be formed from sugars such as glucose. Such Nylon 6 and Nylon 66 are considered to have a similar strength to conventional ones.

Non-limiting typical examples of Nylon 4 include those made from 2-pyrrolidone produced by converting bio-fermented glutamic acid to γ-aminobutyric acid. Since Nylon 4 features good thermal/mechanical stability and easy polymer structure design, it contributes to improvements in tire performance and strength and therefore can be suitably used.

Nylon 410, Nylon 610, Nylon 1010, Nylon 1012, Nylon 11, etc. may be made from ricinoleic acid obtained from castor oil (*Ricinus communis*), etc. Specifically, Nylon 410, Nylon 610, and Nylon 1010 can be produced by condensation polymerization of sebacic acid or dodecanedioic acid obtained from castor oil with any diamine compound. Nylon 11 can be produced by condensation polymerization of 11-aminoundecanoic acid obtained from castor oil.

Semi-aromatic polyamides refer to polyamides having an aromatic ring on a part of the molecular chain. Examples include Nylon 4T (PA4T), Nylon 6T (PA6T), and Nylon 10T (PA10T).

Nylon 4T, Nylon 6T, and Nylon 10T can be produced by condensation polymerization of terephthalic acid as a dicarboxylic acid with any diamine compound having the corresponding number of carbons. Here, these nylon materials may be produced from the biomass-derived terephthalic acid described above. They have a rigid cyclic structure in the molecular chain and therefore are excellent in properties such as heat resistance.

Other examples of the above-described aliphatic polyamides and semi-aromatic polyamides include polyamide 5X produced by polymerizing 1,5-pentanediamine derived from lysine with a dicarboxylic acid (where X represents the number of carbons derived from the dicarboxylic acid and is an integer or T indicating terephthalic acid).

Examples of the fully aromatic polyamides include polyamides having a backbone in which aromatic rings are connected via amide bonds, such as polyparaphenylene telephthalamide. Like the above-mentioned aliphatic polyamides and semi-aromatic polyamides, the fully aromatic polyamides may be produced by binding biomass-derived terephthalic acid to phenylenediamine.

Examples of the cellulose fibers include rayon, polynosic, cupra, acetate, lyocell, modal, and other fibers produced from plant materials such as woods pulp. These cellulose fibers are preferred because they have excellent environmental performance in that, for example, they are not only made from carbon-neutral raw materials, but are also biodegradable and do not emit toxic gases when burned after use. In view of the balance of process efficiency, environmental friendliness, and mechanical strength, rayon, polynosic, and lyocell are particularly preferred among these.

The cord may also be a recycled cord obtained by recovery and refinement from used products such as drink bottles or clothing, followed by re-spinning, regardless of whether it is a synthetic or biomass-derived cord.

The polyethylene terephthalate fiber cord 18A or hybrid cord of the polyethylene terephthalate fiber cord and the additional cord may be formed by intertwining one or more filaments. Examples include those formed by combining and first twisting two 1100 dtex multifilaments (i.e., 1100/2 dtex) for 48 times per 10 cm, followed by combining and final twisting two first twisted cords for the same number of times in the opposite or same direction with respect to that of the first twisting, and those formed by combining and first twisting two 1670 dtex multifilaments (i.e., 1670/2 dtex) for 40 times per 10 cm, followed by combining and final twisting two first twisted cords.

Moreover, the polyethylene terephthalate fiber cord 18A or hybrid cord of the polyethylene terephthalate fiber cord and the additional cord is preferably previously coated with an adhesive layer to ensure good adhesion to the coating layer. The adhesive layer may be a known one. Examples include those formed by treatment with a resorcinol-formaldehyde-rubber latex (RFL), as well as those formed by epoxy treatment with an adhesive composition containing a sorbitol polyglycidyl ether and a blocked isocyanate and then RFL treatment, and those formed by treatment with an adhesive composition containing a halohydrin compound, a blocked isocyanate compound, and a rubber latex.

Examples of the resorcinol-formaldehyde-rubber latex (RFL) include an adhesive composition containing a natural rubber and/or synthetic rubber latex and a co-condensate of phenol-formaldehyde and resorcinol as described in JP S48-11335 A. Such an adhesive composition can be prepared by, for example, a method including condensing phenol and formaldehyde in the presence of an alkaline catalyst, copolymerizing an aqueous phenol-formaldehyde resin solution with resorcinol, and mixing the resulting phenol-formaldehyde-resorcinol resin solution with a latex rubber.

Here, examples of the synthetic rubber latex include polybutadiene polymer latex, styrene-butadiene copolymer latex, polyisoprene polymer latex, butadiene-acrylonitrile copolymer latex, butadiene-vinyl pyridine polymer latex, and butadiene-vinylpyridine-styrene copolymer latex.

The adhesive layer formed of the resorcinol-formaldehyde-rubber latex (RFL) may be formed by attaching a RFL adhesive (for example, by dipping the cord in a RFL liquid). The RFL adhesive is usually attached after a fiber cord is obtained by twisting, but it may be attached before or during the twisting.

The composition of the RFL adhesive is not limited and may be appropriately selected. In particular, it is preferably a composition that contains 0.1 to 10% by mass of resorcinol, 0.1 to 10% by mass of formaldehyde, and 1 to 28% by mass of latex, more preferably a composition that contains 0.5 to 3% by mass of resorcinol, 0.5 to 3% by mass of formaldehyde, and 10 to 25% by mass of latex.

For example, heating may be performed by drying a cord with a RFL adhesive composition attached thereto at 100 to 250°C for one to five minutes and then heat-treating the resulting cord at 150 to 250°C for one to five minutes. The heat treatment conditions after the drying are desirably at 180 to 240°C for one to two minutes.

The adhesive composition containing a sorbitol polyglycidyl ether and a blocked isocyanate may be any composition that contains a sorbitol polyglycidyl ether and a blocked isocyanate. In particular, the adhesive composition desirably contains an epoxy compound that is a sorbitol polyglycidyl ether and has a chlorine content of 9.6% by mass or lower, and a blocked isocyanate.

Examples of the sorbitol polyglycidyl ether include sorbitol diglycidyl ether, sorbitol triglycidyl ether, sorbitol tetraglycidyl ether, sorbitol pentaglycidyl ether, sorbitol hexaglycidyl ether, and mixtures thereof, each of which may contain sorbitol monoglycidyl ether. The sorbitol polyglycidyl ether has a large number of epoxy groups in one molecule and can form a highly crosslinked structure.

The chlorine content of the sorbitol polyglycidyl ether is preferably 9.6% by mass or lower, more preferably 9.5% by mass or lower, still more preferably 9.4% by mass or lower, particularly preferably 9.3% by mass or lower. The lower limit of the chlorine content is not limited and may be 1% by mass or higher, for example.

In the present invention, the chlorine content of the sorbitol polyglycidyl ether can be determined as described in JIS K 7243-3.

The chlorine content of the sorbitol polyglycidyl ether may be reduced, for example, by reducing the amount of epichlorohydrin used in the synthesis of the epoxy compound.

The blocked isocyanate is a compound produced by reaction of an isocyanate compound and a blocking agent, which is temporarily deactivated by the group derived from the blocking agent. When heated at a predetermined temperature, the group derived from the blocking agent can dissociate to form an isocyanate group.

Examples of the isocyanate compound include those having two or more isocyanate groups in the molecule.

Examples of diisocyanates having two isocyanate groups include hexamethylene diisocyanate, diphenylmethane diisocyanate, xylylene diisocyanate, isophorone diisocyanate, phenylene diisocyanate, tolylene diisocyanate, trimethylhexamethylene diisocyanate, metaphenylene diisocyanate, naphthalene diisocyanate, diphenyl ether diisocyanate, diphenylpropane diisocyanate, and biphenyl diisocyanate, as well as isomers, alkylsubstituted products, halides, and benzene ring-hydrogenated products of these diisocyanates. Also usable are triisocyanates having three isocyanate groups, tetraisocyanates having four isocyanate groups, polymethylene polyphenyl polyisocyanates, etc. These isocyanate compounds may be used alone or in combinations of two or more. Tolylene diisocyanate, metaphenylene diisocyanate, diphenylmethane diisocyanate, hexamethylene diisocyanate, and polymethylene polyphenyl polyisocyanate are preferred among these.

Examples of the blocking agent include lactam blocking agents such as ε-caprolactam, δ-valerolactam, γ-butyrolactam, and β-propiolactam; phenolic blocking agents such as phenol, cresol, resorcinol, and xylenol; alcohol blocking agents such as methanol, ethanol, n-propyl alcohol, isopropyl alcohol, n-butyl alcohol, isobutyl alcohol, tert-butyl alcohol, ethylene glycol monoethyl ether, ethylene glycol monobutyl ether, diethylene glycol monoethyl ether, propylene glycol monomethyl ether, and benzyl alcohol; oxime blocking agents such as formamidoxime, acetaldoxime, acetoxime, methyl ethyl ketoxime, diacetyl monoxime, benzophenone oxime, and cyclohexanone oxime; and active methylene blocking agents such as dimethyl malonate, diethyl malonate, ethyl acetoacetate, methyl acetoacetate, and acetylacetone. Lactam blocking agents, phenolic blocking agents, and oxime blocking agents are preferred among these.

In the adhesive composition containing a sorbitol polyglycidyl ether and a blocked isocyanate, the amount of the blocked isocyanate per 100 parts by mass of the sorbitol polyglycidyl ether is preferably 50 parts by mass or more, more preferably 200 parts by mass or more. The upper limit of the amount is preferably 500 parts by mass or less, more preferably 400 parts by mass or less.

The adhesive composition containing a sorbitol polyglycidyl ether and a blocked isocyanate may optionally contain any of the following optional components: epoxy compounds other than the sorbitol polyglycidyl ether, resins coporimerizable with the sorbitol polyglycidyl ether, curing agents other than the blocked isocyanate, organic thickeners, antioxidants, photostabilizers, adhesion improvers, reinforcing agents, softeners, colorants, leveling agents, flame retardants, antistatic agents, etc.

Examples of the epoxy compounds other than the sorbitol polyglycidyl ether include glycidyl ethers such as ethylene glycol glycidyl ether, glycerol polyglycidyl ether, diglycerol polyglycidyl ether, polyglycerol polyglycidyl ether, bisphenol A diglycidyl ether, bisphenol S diglycidyl ether, novolac glycidyl ether, and brominated bisphenol A diglycidyl ether; glycidyl esters such as hexahydrophthalic acid glycidyl ester (monoester or diester) and dimer acid glycidyl ester; glycidyl amines such as triglycidyl isocyanurate, glycidyl hydantoin, tetraglycidyl diaminodiphenylmethane, triglycidyl para-aminophenol, triglycidyl meta-aminophenol, diglycidyl aniline, diglycidyl toluidine, tetraglycidyl meta-xylenediamine, diglycidyl tribromoaniline, and tetraglycidyl bisaminomethylcyclohexane; and alicyclic or aliphatic epoxides such as 3,4-epoxycyclohexylmethyl carboxylate, epoxidized polybutadiene, and epoxidized soybean oil.

The treatment with the adhesive composition containing a sorbitol polyglycidyl ether and a blocked isocyanate may be treatment performed to attach the components in RFL to the cord, optionally followed by heating.

For example, the attachment may be carried out by any method such as application with a roller, spraying through a nozzle, or immersion in a bath liquid (adhesive composition). In view of uniform attachment and removal of the excessive adhesive, attachment by immersion is preferred.

Moreover, to control the amount attached to the cord, other means may be further used such as squeezing with a pressure roller, scraping off with a scraper or the like, blowing off with air, suction, beating with a beater, etc.

The amount attached to the cord is preferably 1.0% by mass or more, more preferably 1.5% by mass or more, but it is preferably 3.0% by mass or less, more preferably 2.5% by mass or less.

Here, the amount attached to the cord refers to the amount of the solids in the RFL adhesive attached per 100 parts by mass of the cord.

The total solid concentration of the adhesive composition containing a sorbitol polyglycidyl ether and a blocked isocyanate is preferably 0.9% by mass or higher, more preferably 14% by mass or higher, but it is preferably 29% by mass or lower, more preferably 23% by mass or lower.

Resorcinol, formaldehyde, and a rubber latex, as well as other additives such as a vulcanization regulator, zinc oxide, an antioxidant, and a defoamer may be added to the adhesive composition containing a sorbitol polyglycidyl ether and a blocked isocyanate.

For example, heating may be performed by drying the reinforcing material (cord) with a RFL adhesive composition attached thereto at 100 to 250°C for one to five minutes and then heat-treating the resulting material at 150 to 250°C for one to five minutes. The heat treatment conditions after the drying are desirably at 180 to 240°C for one to two minutes.

The adhesive composition containing a halohydrin compound, a blocked isocyanate compound, and a rubber latex may be any composition containing these components. It is desirably an adhesive composition that contains a halohydrin compound, a blocked isocyanate compound, and a rubber latex and does not contain resorcinol and formaldehyde.

Examples of the halohydrin compound include compounds produced by reacting a polyol compound and an epihalohydrin compound (halohydrin ether).

The polyol compound refers to a compound having two or more hydroxyl groups in the molecule. Examples include glycols such as ethylene glycol, propylene glycol, polyethylene glycol, and polypropylene glycol, hydroxylic acids such as erythritol, xylitol, sorbitol, and tartaric acid, glyceric acid, glycerol, diglycerol, polyglycerol, trimethylolpropane, trimethylolethane, and pentaerythritol.

Examples of the epihalohydrin compound include epichlorohydrin and epibromohydrin.

Examples of the halohydrin compound include fluoroalcohol compounds, chlorohydrin compounds, bromohydrin compounds, and iodohydrin compounds. Halogenated sorbitols and halogenated glycerols are preferred among these.

The halogen content based on 100% by mass of the halohydrin compound is preferably 5.0 to 15.0% by mass, more preferably 7.0 to 13.0% by mass, still more preferably 9.0 to 12.0% by mass.

Examples of the blocked isocyanate compound include compounds as described above for the blocked isocyanate. Moreover, examples of the rubber latex include those as described above for the rubber latex.

The adhesive composition containing a halohydrin compound, a blocked isocyanate compound, and a rubber latex desirably contains 10.0 to 30.0 parts by mass of the halohydrin compound, 10.0 to 30.0 parts by mass of the blocked isocyanate compound, and 80.0 to 240.0 parts by mass of the rubber latex. Moreover, the adhesive composition desirably does not contain resorcinol and formaldehyde.

The adhesive layer formed of the adhesive composition containing a halohydrin compound, a blocked isocyanate compound, and a rubber latex is formed on the surface of the cord using the adhesive composition. For example, the adhesive layer may be formed by, but not limited to, immersion, brushing, casting, spraying, roll coating, or knife coating.

FIG. 3 is an enlarged cross-sectional view showing the vicinity of the tread portion 4 in the tire 2 of FIG. 1. Tt denotes the thickness of the tread portion 4, and Tb denotes the thickness of the band layer 18.

The thickness Tt of the tread portion 4 is preferably 7.0 mm or more, more preferably 8.5 mm or more, still more preferably 9.9 mm or more, particularly preferably 10.5 mm or more, but it is preferably 18.5 mm or less, more preferably 18.0 mm or less, still more preferably 16.0 mm or less, further preferably 15.6 mm or less, further preferably 13.6 mm or less. When Tt is within the range indicated above, the advantageous effect tends to be better achieved.

In the present invention, the "thickness Tt of the tread portion" refers to the thickness of the tread portion measured on the tire equator CL in a radial cross-section of the tire. The thickness Tt of the tread portion is measured along the normal of the tread surface at the tire equator and corresponds to the distance from the tread surface to the interface closest to the tire surface of the belt layer, carcass layer, belt-reinforcing layer, or other reinforcing layer containing steel or textile or other fiber material. Moreover, when the tread portion has a groove on the tire equator, it is the linear distance from a plane defined by a straight line connecting the outermost edges of the groove with respect to the tire radial direction. In the tire 2 of FIG. 3, the thickness Tt of the tread portion is the linear distance from a plane defined by a straight line connecting the outermost edges of a groove 26 with respect to the tire radial direction, where the plane corresponds to the tread surface, to the outer surface of the band layer 18 with respect to the tire radial direction, when measured on the tire equator CL.

The thickness Tb of the band layer 18 is preferably 0.40 mm or more, more preferably 0.49 mm or more, still more preferably 0.59 mm or more, particularly preferably 0.70 mm or more, but it is preferably 1.26 mm or less, more preferably 0.97 mm or less, still more preferably 0.95 mm or less, particularly preferably 0.88 mm or less. When Tb is within the range indicated above, the advantageous effect tends to be better achieved.

In the present invention, the "thickness of the band layer" refers to the thickness of the band layer including a band cord and a coating rubber thereof measured in a cross-section of the tire cut along a plane including the axis of rotation and also refers to the average of the thicknesses of the band layer measured in the direction of the normal at each point on the surface of the band layer disposed outermost in the tire radial direction. In the band layer 18 in FIG. 3, the thickness is the average of the thicknesses measured in the direction of the normal at each point on the surface of the band layer 18.

To better achieve the advantageous effect, the tire 2 including the tread portion 4 and the band layer 18 desirably satisfies the following relationship:

$$E \times d/Tt > 0.40$$

where E (%) is the residual strain as defined above, d (cN/(tex·%)) is the slope as defined above, and Tt (mm) is the thickness of the tread portion.

The value on the right side of the relationship is preferably 0.50, more preferably 0.65, still more preferably 0.70, further preferably 0.87, further preferably 1.10, particularly preferably 1.50. The upper limit of the value of $E \times d/Tt$ is preferably 2.31 or less, more preferably 2.20 or less, still more preferably 2.00 or less, particularly preferably 1.83 or less.

The reason for the above-mentioned advantageous effect is not exactly clear, but it is believed to be due to the following mechanism.

When the residual strain E and slope d in the band layer are increased relative to the thickness Tt of the tread portion so that the residual strain E, the slope d, and the thickness of the tread portion satisfy "$E \times d/Tt > 0.40$" in order to sufficiently increase restraining force, sufficient restraining force may be obtained even when the temperature rises during high-speed driving. Thus, durability during high-speed driving is believed to be improved significantly by satisfying relationship (1) while satisfying "$E \times d/Tt > 0.40$".

To better achieve the advantageous effect, the tire 2 including the band layer 18 desirably satisfies the following relationship:

$$E \times d/Tb > 7.8$$

where E (%) is the residual strain as defined above, d (cN/(tex·%)) is the slope as defined above, and Tb (mm) is the thickness of the band layer.

The value on the right side of the relationship is preferably 9.5, more preferably 12.5, still more preferably 13.5, further preferably 18.5, further preferably 22.5, particularly preferably 25.5. The upper limit of the value of $E \times d/Tb$ is preferably 35.0 or less, more preferably 34.7 or less, still more preferably 33.0 or less, further preferably 31.0 or less, particularly preferably 30.0 or less.

The reason for the above-mentioned advantageous effect is not exactly clear, but it is believed to be due to the following mechanism.

When the residual strain E and slope d in the band layer are increased relative to the thickness Tb of the band layer so that the residual strain E, the slope d, and the thickness of the band layer satisfy "$E \times d/Tb > 7.8$" in order to sufficiently increase restraining force, sufficient restraining force may be obtained even when the temperature rises during high-speed driving. Thus, durability during high-speed driving is believed to be improved significantly by satisfying relationship (1) while satisfying "$E \times d/Tb > 7.8$".

To better achieve the advantageous effect, the groove depth D (mm) of the circumferential groove formed in the tread portion 4 of the tire 2 desirably satisfies the following relationship:

$$D > 5.6.$$

The value on the right side of the relationship is preferably 5.6, more preferably 6.4, still more preferably 7.2, particularly preferably 7.9. The upper limit of D (mm) is preferably 14.5 or less, more preferably 13.3 or less, still more preferably 12.8 or less, further preferably 12.5 or less, further preferably 12.1 or less, particularly preferably 10.9 or less. When the value is within the range indicated above, the advantageous effect tends to be better achieved.

Herein, the groove depth D of the circumferential groove is measured along the normal of a plane extended from the outermost tread surface forming the ground contact surface, and refers to the distance from the plane extended from the surface forming the ground contact surface to the deepest groove bottom, which is the largest among the groove depths of the circumferential grooves provided.

To better achieve the advantageous effect, the tire 2 including the tread portion 4 and the band layer 18 desirably satisfies the following relationship:

$$E \times d/D > 0.55$$

where E (%) is the residual strain as defined above, d (cN/(tex·%)) is the slope as defined above, and D (mm) is the groove depth of the circumferential groove formed in the tread portion 4.

The value on the right side of the relationship is preferably 0.80, more preferably 1.05, still more preferably 1.20, further preferably 1.80, further preferably 1.90, further preferably 2.10, further preferably 2.25. The upper limit of the value of E×d/D is preferably 3.20 or less, more preferably 2.86 or less, still more preferably 2.60 or less, particularly preferably 2.50 or less.

The reason for the above-mentioned advantageous effect is not exactly clear, but it is believed to be due to the following mechanism.

When the residual strain E and slope d in the band layer are increased relative to the groove depth D in the tread portion so that the residual strain E, the slope d, and the groove depth in the tread portion satisfy "E×d/D > 0.55" in order to sufficiently increase restraining force, sufficient restraining force may be obtained even when the temperature rises during high-speed driving. Thus, durability during high-speed driving is believed to be improved significantly by satisfying relationship (1) while satisfying "E×d/D > 0.55".

To better achieve the advantageous effect, the tire 2 including the tread portion 4 and the band layer 18 desirably satisfies the following relationship:

$$Tt/Lf > 0.38$$

where Tt (mm) is the thickness of the tread portion, and Lf is the stress at 2.5% elongation at 25°C of the polyethylene terephthalate fiber cord taken out of the band layer.

The value on the right side of the relationship is preferably 0.50, more preferably 0.70, still more preferably 0.90, particularly preferably 1.05. The upper limit of the value of Tt/Lf is preferably 1.91 or less, more preferably 1.86 or less, still more preferably 1.65 or less, further preferably 1.61 or less, further preferably 1.50 or less, particularly preferably 1.35 or less.

The reason for the above-mentioned advantageous effect is not exactly clear, but it is believed to be due to the following mechanism.

Reducing the stress at 2.5% elongation can reduce the contact between the band cord and the breaker cord upon deformation induced by driving, thereby preventing tire damage due to band breakage. At the same time, increasing the thickness of the tread portion can further reduce the damage. Thus, durability during high-speed driving is believed to be improved significantly by satisfying relationship (1) while increasing Tt/Lf.

To better achieve the advantageous effect, the tire 2 including the tread portion 4 and the band layer 18 desirably satisfies the following relationship:

$$Tt/Hf > 0.21$$

where Tt (mm) is the thickness of the tread portion, and Hf is the stress at 5.0% elongation at 25°C of the polyethylene terephthalate fiber cord taken out of the band layer.

The value on the right side of the relationship is preferably 0.30, more preferably 0.35, still more preferably 0.40, particularly preferably 0.44. The upper limit of the value of Tt/Hf is preferably 0.81 or less, more preferably 0.70 or less, still more preferably 0.60 or less, particularly preferably 0.55 or less.

The reason for the above-mentioned advantageous effect is not exactly clear, but it is believed to be due to the following mechanism.

Reducing the stress at 5.0% elongation can reduce the contact between the band cord and the breaker cord upon deformation induced by driving, thereby preventing tire damage due to band breakage. At the same time, increasing the thickness of the tread portion can further reduce the damage. Thus, durability during high-speed driving is believed to be improved significantly by satisfying relationship (1) while increasing Tt/Hf.

The tread portion 4 of the tire 2 preferably has a negative ratio S (%) of less than 47%.

The negative ratio S is more preferably 45% or less, still more preferably 40% or less, further preferably 35% or less, particularly preferably 30% or less. The negative ratio is preferably 20% or more, more preferably 25% or more. When the negative ratio is within the range indicated above, the advantageous effect tends to be better achieved.

Here, the negative ratio (negative ratio within the ground contact surface of the tread) refers to the ratio of the total groove area within the ground contact surface relative to the total area of the ground contact surface and is determined as described below.

Herein, when the tire is a pneumatic tire, the negative ratio is calculated from the contact patch of the tire under conditions including a normal rim, a normal internal pressure, and a normal load. When the tire is a non-pneumatic tire, the negative ratio can be similarly determined without the need of a normal internal pressure.

The contact patch may be determined by mounting the tire on a normal rim, applying a normal internal pressure to the tire, and allowing the tire to stand at 25°C for 24 hours, followed by applying black ink to the tread surface of the tire and pressing the tread surface against a cardboard at a normal load (camber angle: 0°) for transfer to the cardboard.

The transfer may be performed on the tire in five positions, each rotated by 72° in the circumferential direction. Namely, five contact patches may be determined.

The contour points of each of the five contact patches are smoothly connected to draw a figure, the area of which is defined as the total area, and the transferred area as a whole constitutes the ground contact area. The average of the results of the five positions is determined and then the negative ratio (%) is calculated by the equation: [1-{Average of areas of five contact patches transferred to cardboard (parts with black ink)}/{Average of five total areas transferred to cardboard (figures obtained from contour points)}] × 100 (%).

Here, the average length or area is the simple average of the five values.

To better achieve the advantageous effect, the tire 2 including the tread portion 4 and the band layer 18 desirably satisfies the following relationship:

$$E \times d/S > 0.17$$

where E (%) is the residual strain as defined above, d (cN/(tex·%)) is the slope as defined above, and S (%) is the negative ratio of the tread portion 4.

The value on the right side of the relationship is preferably 0.22, more preferably 0.50, particularly preferably 0.60. The upper limit of the value of E×d/S is preferably 0.81 or less, more preferably 0.75 or less, still more preferably 0.70 or less.

The reason for the above-mentioned advantageous effect is not exactly clear, but it is believed to be due to the following mechanism.

When the residual strain E and slope d in the band layer are increased relative to the negative ratio S so that the residual strain E, the slope d, and the negative ratio satisfy "E×d/S > 0.17" in order to sufficiently increase restraining force, sufficient restraining force may be obtained even when the temperature rises during high-speed driving. Thus, durability during high-speed driving is believed to be improved significantly by satisfying relationship (1) while satisfying "E×d/S > 0.17".

In the tire 2 of FIG. 1, an innerliner 20 is located inward of the carcass 14. The innerliner 20 is bonded to the inner surface of the carcass 14. The base material rubber of the innerliner 20 is typically a butyl rubber or a halogenated butyl rubber. The innerliner 20 maintains the internal pressure of the tire 2.

Each chafer 22 is located near a bead 12. In this embodiment, the chafer 22 desirably consists of a rubber and a fabric impregnated with the rubber. The chafer 22 may be integrated with the clinch 10.

In the tire 2, the tread portion 4 has grooves 26 including main grooves 42. As shown in FIG. 1, the tread portion 4 has a plurality of, specifically three, main grooves 42 engraved thereon. The main grooves 42 are positioned at intervals in the axial direction. Four ribs 44 extending in the circumferential direction are defined by the three main grooves 42 engraved on this tread portion 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, for example, in rainy weather. Thus, the tire 2 can sufficiently contact the road surface even when the road surface is wet.

The rubber layers (cap layer 30, base layer 28, etc. in FIG. 1) constituting the single-layered tread, two-layered tread, or three or more-layered tread portion 4 in the tire 2 are formed of the respective tread rubber compositions. Moreover, the band layer 18 includes a band cord 18A and a topping rubber 18B (coating rubber) coating the band cord 18A, and the coating rubber is formed of a band layer coating rubber composition.

Hereinafter, materials commonly usable in the tread rubber composition and the band layer coating rubber composition are described.

Here, the tread portion 4 desirably includes at least one rubber layer formed from a rubber composition containing the components described below. Desirably, the cap tread (corresponding to the cap layer 30 in the example of FIG. 1), which is the outermost rubber layer of the tread portion 4 with respect to the tire radial direction, is formed of the rubber composition described below.

The tread rubber composition and the band layer coating rubber composition each contain one or more rubber components.

The rubber components contribute to crosslinking and generally correspond to polymer components which have a weight average molecular weight (Mw) of 10,000 or more and which are not extractable with acetone. The rubber components are solid at room temperature (25°C).

The weight average molecular weight of the rubber components is preferably 50,000 or more, more preferably 150,000 or more, still more preferably 200,000 or more, but it is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) and calibrated with polystyrene standards.

Examples of rubber components which may be used in the tread rubber composition and the band layer coating rubber composition include diene rubbers. Examples of diene rubbers include isoprene-based rubbers, polybutadiene rubbers (BR), styrene-butadiene rubbers (SBR), styreneisoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more.

In order to better achieve the advantageous effect, for the tread rubber composition, isoprene-based rubbers, BR, and SBR are preferred among these, with BR or SBR being more preferred, while for the band layer coating rubber composition, isoprene-based rubbers, BR, and SBR are preferred, with isoprene-based rubbers or SBR being more preferred.

These rubber components may also be subjected to the below-described modification or hydrogenation process. Rubbers extended with oils, resins, liquid rubber components, etc. are also usable.

The diene rubbers may be either unmodified or modified diene rubbers.

The modified diene rubbers may be any diene rubber having a functional group interactive with filler such as silica. Examples include a chain end-modified diene rubber obtained by modifying at least one chain end of a diene rubber with a compound (modifier) having the above functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxy, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of isoprene-based rubbers include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more.

The amount of isoprene-based rubbers, if present, based on 100% by mass of the rubber component content in the tread rubber composition is preferably 5% by mass or more, more preferably 10% by mass or more, still more preferably 15% by mass or more, but it is preferably 30% by mass or less, more preferably 25% by mass or less, still more preferably 20% by mass or less. When the amount is within the range indicated above, the advantageous effect tends to be better achieved.

The amount of isoprene-based rubbers, if present, based on 100% by mass of the rubber component content in the band layer coating rubber composition is preferably 5% by mass or more, more preferably 50% by mass or more, still more preferably 70% by mass or more, but it is preferably 95 by mass or less, more preferably 90% by mass or less, still more preferably 80% by mass or less. When the amount is within the range indicated above, the advantageous effect tends to be better achieved.

Any BR may be used. Examples include high-cis BR having a high cis content, BR containing syndiotactic polybutadiene crystals, and BR synthesized using rare earth catalysts (rare earth-catalyzed BR). These may be used alone or in combinations of two or more. In particular, the BR preferably includes high-cis BR having a cis content of 90% by mass or higher. The cis content is more preferably 95% by mass or higher, still more preferably 98% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the equation: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20×90 + 10×40)/(20 + 10)).

Moreover, the BR may be either unmodified or modified BR. Examples of the modified BR include those into which functional groups as listed for the modified diene rubbers have been introduced. The BR may also be hydrogenated polybutadiene polymers (hydrogenated BR).

For example, usable commercial BR products are available from UBE Corporation, JSR Corporation, Asahi Kasei Corporation, Zeon Corporation, etc.

The amount of BR, if present, based on 100% by mass of the rubber component content in the tread rubber composition is preferably 5% by mass or more, more preferably 10% by mass or more, still more preferably 15% by mass or more. The upper limit is preferably 50% by mass or less, more preferably 30% by mass or less, still more preferably 20% by mass or less. When the amount is within the range indicated above, the advantageous effect tends to be better achieved.

The amount of BR, if present, based on 100% by mass of the rubber component content in the band layer coating rubber composition is preferably 5% by mass or more, more preferably 10% by mass or more, still more preferably 15% by mass or more. The upper limit is preferably 30% by mass or less, more preferably 25% by mass or less, still more preferably 20% by mass or less. When the amount is within the range indicated above, the advantageous effect tends to be better achieved.

Any SBR may be used. Examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 20% by mass or higher, still more preferably 21% by mass or higher, further preferably 25% by mass or higher. The styrene content is preferably 45% by mass or lower, more preferably 40% by mass or lower, still more preferably 35% by mass or lower. When the styrene content is within the range indicated above, durability during high-speed driving tends to be improved.

Herein, the styrene content can be measured by $^1$H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85×40 + 5×25)/(85 + 5)).

The vinyl bond content (vinyl content) of the SBR is preferably 3% by mass or higher, more preferably 5% by mass or higher, still more preferably 7% by mass or higher. The vinyl bond content is preferably 70% by mass or lower, more preferably 66% by mass or lower, still more preferably 50% by mass or lower, further preferably 25% by mass or lower, further preferably 15% by mass or lower, further preferably 13% by mass or lower. When the vinyl bond content is within the range indicated above, durability during high-speed driving tends to be improved.

Herein, the vinyl bond content (1,2-butadiene unit content) can be measured by infrared absorption spectrometry.

The vinyl bond content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl bond content of the SBR refers to the vinyl bond content of the one SBR, while when multiple types of SBR are used, it refers to the average vinyl bond content.

The average vinyl bond content of the SBR can be calculated using the equation: Σ{amount of each SBR × (100 (% by mass) - styrene content (% by mass) of the each SBR) × vinyl bond content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl bond content of 30% by mass, 15 parts by mass of SBR having a styrene content of 25% by mass and a vinyl bond content of 20% by mass, and the remaining 10 parts by mass of a rubber component other than SBR, the average vinyl bond content of the SBR is 28% by mass (= {75×(100 (% by mass) - 40 (% by mass))×30 (% by mass) + 15×(100 (% by mass) - 25 (% by mass))×20 (% by mass)}/{75×(100 (% by mass) - 40 (% by mass)) + 15×(100 (% by mass) - 25 (% by mass))}.

The SBR may be either unmodified or modified SBR. Examples of the modified SBR include those into which functional groups as listed for the modified diene rubbers have been introduced. The SBR may also be hydrogenated styrene-butadiene copolymers (hydrogenated SBR).

SBR products manufactured or sold by Sumitomo Chemical Co., Ltd., JSR Corporation, Asahi Kasei Corporation, Zeon Corporation, etc. may be used as the SBR.

The amount of SBR, if present, based on 100% by mass of the rubber component content in the tread rubber composition is preferably 5% by mass or more, more preferably 50% by mass or more, still more preferably 70% by mass or more, further preferably 80% by mass or more. The upper limit is preferably 95% by mass or less, more preferably 90% by mass or less, still more preferably 85% by mass or less. When the amount is within the range indicated above, the advantageous effect tends to be better achieved.

The amount of SBR, if present, based on 100% by mass of the rubber component content in the band layer coating rubber composition is preferably 5% by mass or more, more preferably 10% by mass or more, still more preferably 15% by mass or more. The upper limit is preferably 50% by mass or less, more preferably 40% by mass or less, still more preferably 30% by mass or less. When the amount is within the range indicated above, the advantageous effect tends to be better achieved.

The tread rubber composition or band layer coating rubber composition may contain a filler.

Any filler may be used, including materials known in the rubber field. Examples include inorganic fillers such as carbon black, silica, calcium carbonate, talc, alumina, clay, aluminum hydroxide, aluminum oxide, and mica; and hard-to-disperse fillers.

The total amount of fillers (the total amount of fillers such as silica and carbon black) per 100 parts by mass of the rubber component content in the tread rubber composition is preferably 30 parts by mass or more, more preferably 60 parts by mass or more, still more preferably 65 parts by mass or more, further preferably 70 parts by mass or more, further preferably 75 parts by mass or more, particularly preferably 80 parts by mass or more. The upper limit of the total amount is preferably 150 parts by mass or less, more preferably 120 parts by mass or less, still more preferably 110 parts by mass or less, further preferably 100 parts by mass or less. When the total amount is within the range indicated above, the advantageous effect tends to be better achieved.

The total amount of fillers (the total amount of fillers such as silica and carbon black) per 100 parts by mass of the rubber component content in the band layer coating rubber composition is preferably 10 parts by mass or more, more preferably 30 parts by mass or more, still more preferably 40 parts by mass or more, particularly preferably 50 parts by mass or more. The upper limit of the total amount is preferably 100 parts by mass or less, more preferably 80 parts by mass or less, still more preferably 74 parts by mass or less, further preferably 70 parts by mass or less, further preferably 60 parts by mass or less. When the total amount is within the range indicated above, the advantageous effect tends to be better achieved.

Carbon-derived fillers (carbon-containing fillers), such as carbon black, and silica are preferred among the fillers.

Non-limiting examples of carbon black usable in the tread rubber composition or band layer coating rubber composition include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more. In addition to the conventional carbon black made from mineral oils, etc., carbon black made from biomass materials such as lignin is also usable.

The nitrogen adsorption specific surface area ($N_2SA$) of the carbon black in the tread rubber composition is preferably 50 $m^2/g$ or more, more preferably 70 $m^2/g$ or more, still more preferably 90 $m^2/g$ or more. The $N_2SA$ is also preferably 200 $m^2/g$ or less, more preferably 150 $m^2/g$ or less, still more preferably 120 $m^2/g$ or less, further preferably 114 $m^2/g$ or less. When the $N_2SA$ is within the range indicated above, the advantageous effect tends to be better achieved.

Here, the nitrogen adsorption specific surface area of the carbon black can be determined in accordance with JIS K 6217-2:2001.

The nitrogen adsorption specific surface area ($N_2SA$) of the carbon black in the band layer coating rubber composition is preferably 10 $m^2/g$ or more, more preferably 20 $m^2/g$ or more, still more preferably 25 $m^2/g$ or more. The $N_2SA$ is also preferably 80 $m^2/g$ or less, more preferably 60 $m^2/g$ or less, still more preferably 45 $m^2/g$ or less, particularly preferably 35 $m^2/g$ or less. When the $N_2SA$ is within the range indicated above, the advantageous effect tends to be better achieved.

The amount of carbon black per 100 parts by mass of the rubber component content in the tread rubber composition is preferably 1 part by mass or more, more preferably 3 parts by mass or more, still more preferably 5 parts by mass or more, further preferably 10 parts by mass or more. The upper limit of the amount is preferably 100 parts by mass or less, more preferably 55 parts by mass or less, still more preferably 50 parts by mass or less, further preferably 45 parts by mass or less, further preferably 40 parts by mass or less, further preferably 30 parts by mass or less, further preferably 15 parts by mass or less. When the amount is within the range indicated above, the advantageous effect tends to be better achieved.

The amount of carbon black per 100 parts by mass of the rubber component content in the band layer coating rubber composition is preferably 10 parts by mass or more, more preferably 30 parts by mass or more, still more preferably 40 parts by mass or more, particularly preferably 50 parts by mass or more. The upper limit of the amount is preferably 100 parts by mass or less, more preferably 80 parts by mass or less, still more preferably 74 parts by mass or less, further preferably 70 parts by mass or less, further preferably 60 parts by mass or less. When the amount is within the range indicated above, the advantageous effect tends to be better achieved.

Examples of silica usable in the tread rubber composition or band layer coating rubber composition include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more. In addition to the above-mentioned types of silica, silica made from biomass materials such as rice husks is also usable.

The nitrogen adsorption specific surface area ($N_2SA$) of the silica is preferably 50 $m^2$/g or more, more preferably 100 $m^2$/g or more, still more preferably 150 $m^2$/g or more, further preferably 175 $m^2$/g or more, particularly preferably 180 $m^2$/g or more, most preferably 190 $m^2$/g or more. Moreover, the upper limit of the $N_2SA$ of the silica is not limited, and it is preferably 350 $m^2$/g or less, more preferably 300 $m^2$/g or less, still more preferably 250 $m^2$/g or less. When the $N_2SA$ is within the range indicated above, the advantageous effect tends to be better achieved.

Here, the $N_2SA$ of the silica is measured by a BET method in accordance with ASTM D3037-93.

The amount of silica per 100 parts by mass of the rubber component content in the tread rubber composition is preferably 20 parts by mass or more, more preferably 50 parts by mass or more, still more preferably 55 parts by mass or more, further preferably 60 parts by mass or more, further preferably 65 parts by mass or more, particularly preferably 75 parts by mass or more. The upper limit of the amount is preferably 150 parts by mass or less, more preferably 100 parts by mass or less, still more preferably 90 parts by mass or less. When the amount is within the range indicated above, the advantageous effect tends to be better achieved.

The amount of silica, if present, per 100 parts by mass of the rubber component content in the band layer coating rubber composition is preferably 5 parts by mass or more, more preferably 10 parts by mass or more, still more preferably 15 parts by mass or more. The upper limit of the amount is preferably 30 parts by mass or less, more preferably 25 parts by mass or less, still more preferably 20 parts by mass or less. When the amount is within the range indicated above, the advantageous effect tends to be better achieved.

When the tread rubber composition or band layer coating rubber composition contains silica, it preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the tread rubber composition or band layer coating rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These microfibrillated plant fibers may be used alone or in combinations of two or more.

Herein, the term "cellulose microfibrils" typically refers to cellulose fibers having an average fiber diameter of not more than 10 μm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The amount of hard-to-disperse fillers per 100 parts by mass of the rubber component content in the tread rubber composition or band layer coating rubber composition is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The tread rubber composition or band layer coating rubber composition may contain a plasticizer.

The term "plasticizer" refers to a material that can impart plasticity to rubber components. Examples include liquid plasticizers (plasticizers which are liquid at room temperature (25°C)) and resins (resins which are solid at room temperature (25°C)).

The amount of plasticizers (the total amount of plasticizers) per 100 parts by mass of the rubber component content in the tread rubber composition is preferably 5 parts by mass or more, more preferably 10 parts by mass or more, still more preferably 15 parts by mass or more, but it is preferably 50 parts by mass or less, more preferably 30 parts by mass or less, still more preferably 25 parts by mass or less, further preferably 20 parts by mass or less. When the amount is within the range indicated above, the advantageous effect tends to be better achieved. It should be noted that when the above-mentioned extended rubbers are used, the amount of the extender components used in the extended rubbers is included in the amount of plasticizers.

The amount of plasticizers (the total amount of plasticizers) per 100 parts by mass of the rubber component content in the band layer coating rubber composition is preferably 30 parts by mass or less, more preferably 10 parts by mass or less, still more preferably 8 parts by mass or less, further preferably 5 parts by mass or less, further preferably 2 parts by mass or less, particularly preferably 1 part by mass or less, and may be 0 parts by mass. When the amount is within the range indicated above, the advantageous effect tends to be better achieved. It should be noted that when the above-mentioned extended rubbers are used, the amount of the extender components used in the extended rubbers are included in the amount of plasticizers.

Any liquid plasticizer (plasticizer which is liquid at room temperature (25°C)) may be used in the tread rubber composition or band layer coating rubber composition, and examples include oils and liquid polymers (liquid resins, liquid diene polymers, etc.). These may be used alone or in combinations of two or more.

The amount of liquid plasticizers per 100 parts by mass of the rubber component content in the tread rubber composition is preferably 5 parts by mass or more, more preferably 10 parts by mass or more, still more preferably 15 parts by mass or more, but it is preferably 50 parts by mass or less, more preferably 30 parts by mass or less, still more preferably 25 parts by mass or less, further preferably 20 parts by mass or less. When the amount is within the range indicated above, the advantageous effect tends to be better achieved. Here, a similar range is also suitable for the amount of oils.

The amount of liquid plasticizers per 100 parts by mass of the rubber component content in the band layer coating rubber composition is preferably 30 parts by mass or less, more preferably 10 parts by mass or less, still more preferably 8 parts by mass or less, further preferably 5 parts by mass or less, further preferably 2 parts by mass or less, particularly preferably 1 part by mass or less, and may be 0 parts by mass. When the amount is within the range indicated above, the advantageous effect tends to be better achieved. Here, a similar range is also suitable for the amount of oils.

Examples of oils include process oils, plant oils, and mixtures thereof. Examples of process oils include paraffinic process oils, aromatic process oils, and naphthenic process oils, such as mild extract solvates (MES), distillate aromatic extracts (DAE), treated distillate aromatic extracts (TDAE), treated residual aromatic extracts (TRAE), and residual aromatic extracts (RAE). Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these. In view of life cycle assessment, oils obtained by purifying lubricating oils used in rubber mixing machines, engines, or other applications, or waste cooking oils used in cooking establishments may also be used as the oils.

Examples of liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of these polymers are also usable.

Examples of the resins (resins which are solid at room temperature (25°C)) usable in the tread rubber composition or band layer coating rubber composition include aromatic vinyl polymers, coumarone-indene resins, coumarone resins, indene resins, phenol resins, rosin resins, petroleum resins, terpene resins, and acrylic resins, all of which are solid at room temperature (25°C). These resins may also be hydrogenated. These may be used alone or in combinations of two or more. Aromatic vinyl polymers, petroleum resins, and terpene resins are preferred among these.

The amount of the above-mentioned resins, if present, per 100 parts by mass of the rubber component content in the tread rubber composition is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The amount of the above-mentioned resins, if present, per 100 parts by mass of the rubber component content in the band layer coating rubber composition is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The softening point of the above-mentioned resins is preferably 60°C or higher, more preferably 70°C or higher, still more preferably 80°C or higher. The upper limit of the softening point is preferably 160°C or lower, more preferably 130°C or lower, still more preferably 115°C or lower. When the softening point is within the range indicated above, durability during high-speed driving tends to be improved.

Here, the softening point of the above-mentioned resins is determined as set forth in JIS K 6220-1:2001 using a ring and ball softening point measuring apparatus, and the temperature at which the ball drops down is defined as the softening point. The softening point of the resins indicated above is usually higher by 50°C ± 5°C than the glass transition temperature of the resins.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The terpene resins refer to polymers containing terpenes as structural units. Examples include polyterpene resins produced by polymerization of terpene compounds, and aromatic modified terpene resins produced by polymerization of terpene compounds and aromatic compounds. Hydrogenated products of these resins are also usable.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as a monoterpene $(C_{10}H_{16})$, sesquiterpene $(C_{15}H_{24})$, diterpene $(C_{2o}H_{32})$, or other terpene. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and α-methylstyrene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, $\alpha$-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The tread rubber composition or band layer coating rubber composition preferably contains an antioxidant in view of properties such as cracking resistance and ozone resistance.

Non-limiting examples of antioxidants include naphthylamine antioxidants such as phenyl-$\alpha$-naphthylamine; diphenylamine antioxidants such as octylated diphenylamine and 4,4'-bis($\alpha,\alpha'$-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate] methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. For example, usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component content in the tread rubber composition or band layer coating rubber composition is preferably 0.5 parts by mass or more, more preferably 1.0 parts by mass or more, still more preferably 2.0 parts by mass or more. The amount is preferably 7.0 parts by mass or less, more preferably 4.0 parts by mass or less, still more preferably 3.0 parts by mass or less.

The tread rubber composition or band layer coating rubber composition preferably contains stearic acid.

The amount of stearic acid per 100 parts by mass of the rubber component content in the tread rubber composition or band layer coating rubber composition is preferably 0.5 parts by mass or more, more preferably 1.0 parts by mass or more, still more preferably 1.5 parts by mass or more, further preferably 2.0 parts by mass or more. The amount is preferably 7.0 parts by mass or less, more preferably 4.0 parts by mass or less, still more preferably 3.0 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The tread rubber composition or band layer coating rubber composition preferably contains zinc oxide.

The amount of zinc oxide per 100 parts by mass of the rubber component content in the tread rubber composition or band layer coating rubber composition is preferably 0.5 parts by mass or more, more preferably 1.0 parts by mass or more, still more preferably 2.0 parts by mass or more. The amount is preferably 12.0 parts by mass or less, more preferably 11.0 parts by mass or less, still more preferably 10.0 parts by mass or less, further preferably 5.0 parts by mass or less.

Here, conventionally known zinc oxide may be used, including, for example, those available from Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc.

The tread rubber composition or band layer coating rubber composition may contain a wax.

The amount of waxes per 100 parts by mass of the rubber component content in the tread rubber composition or band layer coating rubber composition is preferably 0.5 parts by mass or more, more preferably 1.0 parts by mass or more, still more preferably 2.0 parts by mass or more. The amount is preferably 10.0 parts by mass or less, more preferably 7.0 parts by mass or less, still more preferably 5.0 parts by mass or less.

Any wax may be used. Examples include petroleum waxes, natural waxes, and synthetic waxes produced by purifying or chemically treating a plurality of waxes. These waxes may be used alone or in combinations of two or more.

Examples of petroleum waxes include paraffin waxes and microcrystalline waxes. Any natural wax derived from non-petroleum resources is usable. Examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing waxes. For example, usable commercial products are available from Ouchi Shinko Chemical Industrial Co., Ltd., Nippon Seiro Co., Ltd., Seiko Chemical Co., Ltd., etc.

The tread rubber composition or band layer coating rubber composition preferably contains sulfur to moderately form crosslinks between the polymer chains, thereby imparting good properties.

The amount of sulfur per 100 parts by mass of the rubber component content in the tread rubber composition or band layer coating rubber composition is preferably 0.1 parts by mass or more, more preferably 1.0 parts by mass or more, still more preferably 1.7 parts by mass or more. The amount is preferably 6.0 parts by mass or less, more preferably 5.0 parts by mass or less, still more preferably 4.0 parts by mass or less, further preferably 3.0 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The tread rubber composition or band layer coating rubber composition preferably contains a vulcanization accelerator.

The amount of vulcanization accelerators in the tread rubber composition or band layer coating rubber composition is not limited and may be freely determined according to the desired curing rate and crosslink density. The amount of vulcanization accelerators per 100 parts by mass of the rubber component content is preferably 0.5 parts by mass or more, more preferably 1.0 parts by mass or more, still more preferably 2.5 parts by mass or more. The upper limit is preferably 8.0 parts by mass or less, more preferably 6.0 parts by mass or less, still more preferably 4.0 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators, guanidine vulcanization accelerators, and benzothiazole vulcanization accelerators are preferred among these.

In addition to the above-mentioned components, the tread rubber composition or band layer coating rubber composition may appropriately contain compounding agents commonly used in the tire industry, such as releasing agents or other materials.

The materials described above may also be used in rubber compositions for forming tire components other than the tread portion 4 and the band layer 18 while appropriately changing the amounts of the materials.

To better achieve the advantageous effect, the band layer 18 and the cap layer 30 (corresponding to a cap tread) of the tread portion 4 in the tire 2 desirably satisfy the following relationship:

$$E \times d / Ft > 0.07$$

where E (%) is the residual strain as defined above, d (cN/(tex.%)) is the slope as defined above, and Ft (parts by mass) is the amount of fillers per 100 parts by mass of the rubber component content in the cap layer 30.

The value on the right side of the relationship is preferably 0.10, more preferably 0.20, still more preferably 0.25, particularly preferably 0.28. The upper limit of the value of $E \times d / Ft$ is preferably 0.40 or less, more preferably 0.37 or less, still more preferably 0.35 or less, particularly preferably 0.33 or less.

The reason for the above-mentioned advantageous effect is not exactly clear, but it is believed to be due to the following mechanism.

When the residual strain E and slope d in the band layer are increased relative to the amount Ft of fillers in the cap tread so that the residual strain E, the slope d, and the amount of fillers in the cap tread satisfy "$E \times d / Ft > 0.07$" in order to sufficiently increase restraining force, sufficient restraining force may be obtained even when the temperature rises during high-speed driving. Thus, durability during high-speed driving is believed to be improved significantly by satisfying relationship (1) while satisfying "$E \times d / Ft > 0.07$".

To better achieve the advantageous effect, the band layer 18 of the tire 2 desirably satisfies the following relationship:

$$E \times d/Fb > 0.10$$

where E (%) is the residual strain as defined above, d (cN/(tex.%)) is the slope as defined above, and Fb (parts by mass) is the amount of fillers per 100 parts by mass of the rubber component content in the coating rubber 18B in the band layer 18.

The value on the right side of the relationship is preferably 0.20, more preferably 0.30, still more preferably 0.35, particularly preferably 0.37. The upper limit of the value of E×d/Fb is preferably 0.49 or less, more preferably 0.45 or less, still more preferably 0.43 or less, particularly preferably 0.42 or less.

The reason for the above-mentioned advantageous effect is not exactly clear, but it is believed to be due to the following mechanism.

When the residual strain E and slope d in the band layer are increased relative to the amount Fb of fillers in the band layer so that the residual strain E, the slope d, and the amount of fillers in the band layer satisfy "E×d/Fb > 0.10" in order to sufficiently increase restraining force, sufficient restraining force may be obtained even when the temperature rises during high-speed driving. Thus, durability during high-speed driving is believed to be improved significantly by satisfying relationship (1) while satisfying "E×d/Fb > 0.10".

To better achieve the advantageous effect, the band layer 18 and the cap layer 30 (corresponding to a cap tread) of the tread portion 4 in the tire 2 desirably satisfy the following relationship:

$$E \times d/AEt > 0.4$$

where E (%) is the residual strain as defined above, d (cN/(tex.%)) is the slope as defined above, and AEt (% by mass) is the acetone-extractable content of the cap layer 30.

The value on the right side of the relationship is preferably 0.7, more preferably 1.0, still more preferably 1.2, particularly preferably 1.4. The upper limit of the value of E×d/AEt is preferably 2.3 or less, more preferably 2.1 or less, still more preferably 1.9 or less, particularly preferably 1.8 or less.

The reason for the above-mentioned advantageous effect is not exactly clear, but it is believed to be due to the following mechanism.

When the residual strain E and slope d in the band layer are increased relative to the acetone-extractable content AEt of the cap tread so that the residual strain E, the slope d, and the acetone-extractable content of the cap tread have a higher E×d/AEt value in order to sufficiently increase restraining force, sufficient restraining force may be obtained even when the temperature rises during high-speed driving. Thus, durability during high-speed driving is believed to be improved significantly by satisfying relationship (1) while increasing the value of E×d/AEt.

To better achieve the advantageous effect, the cap layer 30 (corresponding to a cap tread) of the tread portion 4 in the tire 2 preferably has an acetone-extractable content AEt of 20% by mass or lower, more preferably 17% by mass or lower, still more preferably 15% by mass or lower, further preferably 14% by mass or lower, particularly preferably 12% by mass or lower. The lower limit of the acetone-extractable content is not limited, but it is preferably 3% by mass or higher, more preferably 5% by mass or higher, still more preferably 7% by mass or higher.

To better achieve the advantageous effect, the band layer 18 of the tire 2 desirably satisfies the following relationship:

$$E \times d/AEb > 1.0$$

where E (%) is the residual strain as defined above, d (cN/(tex.%)) is the slope as defined above, and AEb (% by mass) is the acetone-extractable content of the coating rubber 18B in the band layer 18.

The value on the right side of the relationship is preferably 1.7, more preferably 2.3, still more preferably 2.8, particularly preferably 3.0. The upper limit of the value of E×d/AEb is preferably 4.5 or less, more preferably 4.0 or less, still more preferably 3.8 or less, particularly preferably 3.6 or less.

The reason for the above-mentioned advantageous effect is not exactly clear, but it is believed to be due to the following mechanism.

When the residual strain E and slope d in the band layer are increased relative to the acetone-extractable content AEb of the coating rubber in the band layer so that the residual strain E, the slope d, and the acetone-extractable content of the coating rubber have a higher E×d/AEb value in order to sufficiently increase restraining force, sufficient restraining force may be obtained even when the temperature rises during high-speed driving. Thus, durability during high-speed driving is believed to be improved significantly by satisfying relationship (1) while increasing the value of E×d/AEb.

To better achieve the advantageous effect, the coating rubber 18B in the band layer 18 in the tire 2 preferably has an acetone-extractable content AEb of 12.0% by mass or lower, more preferably 10.0% by mass or lower, still more preferably 8.7% by mass or lower, further preferably 8.0% by mass or lower, further preferably 7.5% by mass or lower, particularly preferably 6.0% by mass or lower. The lower limit of the acetone-extractable content is not limited, but it is preferably 1.0% by mass or higher, more preferably 2.0% by mass or higher, still more preferably 2.5% by mass or higher, further preferably 5.5% by mass or higher.

Here, the acetone-extractable content is measured as described below. It should be noted that the acetone-extractable content is measured for the vulcanized rubber composition.

The acetone-extractable content (unit: % by mass based on the rubber composition (specimen)) can be determined by sampling the cap tread and the coating rubber of the band layer from the tire to prepare specimens and measuring the specimens by a method for measuring the acetone-extractable content in accordance with JIS K 6229:2015.

The acetone-extractable content can be controlled by methods known to a person skilled in the art. For example, the acetone-extractable content tends to increase as the amount of plasticizers such as oils in the rubber composition increases.

The tread rubber composition, the band layer coating rubber composition, etc. may be prepared by known methods. For example, they may be prepared by kneading the above-mentioned components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is preferably 50°C or higher, more preferably 80°C or higher, but it is preferably 200°C or lower, more preferably 190°C or lower. The kneading time is preferably 30 seconds or more, more preferably 1 minute or more, but it is preferably 30 minutes or less. In a final kneading step of kneading vulcanizing agents and vulcanization accelerators, the kneading temperature is preferably 20°C or higher, but it is preferably 100°C or lower, more preferably 80°C or lower. Then, the composition obtained after kneading vulcanizing agents and vulcanization accelerators is usually vulcanized by press vulcanization, for example. The vulcanization temperature is preferably 120°C or higher, more preferably 140°C or higher, but it is preferably 200°C or lower, more preferably 180°C or lower.

The present invention may be applied to a tire such as a pneumatic tire or a non-pneumatic tire, preferably a pneumatic tire. In particular, the tire may be suitably used as a summer tire or winter tire (e.g., studless tire, cold weather tire, snow tire, studded tire). The tire may be used as a tire for passenger cars, large passenger cars, large SUVs, heavy duty vehicles such as trucks and buses, light trucks, or motorcycles, or as a racing tire (high performance tire), etc.

The tire can be produced with a tread portion, a band cord such as a polyethylene terephthalate fiber cord, and a reinforcing rubber coating the band cord by a usual method. For example, an unvulcanized rubber composition containing various components may be processed into the shape of a tread or a band layer combining a band cord and a reinforcing rubber coating the band cord, followed by assembling with other tire components on a tire building machine by a usual method to build an unvulcanized tire. The unvulcanized tire may be heated and pressurized in a vulcanizer to obtain a tire.

Particularly preferred embodiments of the present invention are described in detail above.

EXAMPLES

Examples (working examples) which are considered preferable to implement the present invention are described below although the scope of the invention is not limited to the examples.

Prototype 195/65R15 pneumatic tires for passenger cars (test tires) having the basic structure shown in FIG. 1 are produced according to the specifications indicated in each table.

The test tires prepared according to the specifications varied as shown in each table were simulated, and the results calculated according to the below-described evaluations are shown in each table.

Here, the reference comparative example in each table is as follows.

Tables 1 to 3: Comparative Example 1-1
Table 4: Comparative Example 2-1
Table 5: Comparative Example 3-1

<Residual strain E of polyethylene terephthalate fiber cord in band layer>

The residual strain E is measured as described above.

<Stress Lf at 2.5% elongation at 25°C and stress Hf at 5.0% elongation at 25°C of polyethylene terephthalate fiber cord taken out of band layer>

The stress Lf at 2.5% elongation and the stress Hf at 5.0% elongation are measured as described above.

<Viscoelastic testing>

Samples with a width of 4 mm, a length of 20 mm, and a thickness of 1 mm are collected from the cap tread (cap layer) of each test tire. The loss tangent tanδ of each cap tread sample is measured using EPLEXOR series available from GABO at a temperature of 30°C, an initial strain of 10%, a dynamic strain of 1%, and a frequency of 10 Hz in extension mode.

<Acetone-extractable content>

Rubber specimens are cut out of the cap tread (cap layer) or the coating rubber of the band layer in each test tire, and the amount (% by mass) of matter extractable with acetone from each specimen is measured by a method for measuring the acetone-extractable content in accordance with JIS K 6229:2015.

Acetone-extractable content (% by mass) = [(Mass of sample before extraction) - (Mass of sample after extraction)]/ (Mass of sample before extraction) $\times$ 100

<Durability during high-speed driving>

Each test tire is run on a drum at a speed of 230 km/h using a drum tester under conditions including a standard rim (6.0J), an internal pressure of 260 kPa, a load of 4.56 kN, and a road surface temperature of 80°C to determine the running time until separation damage occurs to the tread rubber. The result is expressed as an index relative to that of the reference comparative example taken as 100. A higher index indicates better durability during high-speed driving.

The materials of each cap tread compound (cap tread rubber composition) in the tables are as follows.

SBR: NS616 (non-oil extended SBR, styrene content: 21% by mass, vinyl content: 66% by mass, Tg: -23°C, Mw: 240,000) available from Zeon Corporation
BR: BR150B (cis content: 98% by mass) available from UBE Corporation
Silica: ULTRASIL VN3 ($N_2$SA: 175 $m^2$/g) available from Degussa
Carbon black 1: DIABLACK N220 ($N_2$SA: 114 $m^2$/g) available from Mitsubishi Chemical Corporation
Oil: Diana Process oil AH-24 (aromatic process oil) available from Idemitsu Kosan Co., Ltd.
Silane coupling agent: Si69 (bis(3-triethoxysilylpropyl)tetrasulfide) available from Degussa
Antioxidant 1: NOCRAC 6C (N-(1,3-dimethylbutyl)-N'-phenyl-p-phenylenediamine) available from Ouchi Shinko Chemical Industrial Co., Ltd.
Antioxidant 2: NOCRAC 224 (polymerized 2,2,4-trimethyl-1,2-dihydroquinoline) available from Ouchi Shinko Chemical Industrial Co., Ltd.
Wax: Ozoace 0355 available from Nippon Seiro Co., Ltd.
Stearic acid: stearic acid available from NOF Corporation
Zinc oxide: zinc oxide #3 available from Hakusui Tech Co., Ltd.
Sulfur: powdered sulfur available from Tsurumi Chemical Industry Co., Ltd.
Vulcanization accelerator 1: NOCCELER CZ-G (N-cyclohexyl-2-benzothiazolylsulfenamide) available from Ouchi Shinko Chemical Industrial Co., Ltd.
Vulcanization accelerator 2: NOCCELER DZ (N,N-dicyclohexyl-2-benzothiazolylsulfenamide, DCBS) available from Ouchi Shinko Chemical Industrial Co., Ltd.

The materials of each band layer coating rubber compound (band layer coating rubber composition) in the tables are as follows.

NR: TSR20
Styrene-butadiene rubber: SBR1502 available from Sumitomo Chemical Industry Company Limited
Carbon black 2: DIABLACK N326 ($N_2$SA:80 $m^2$/g) available from Mitsubishi Chemical Corporation
Oil: Diana Process oil AH-24 (aromatic process oil) available from Idemitsu Kosan Co., Ltd.
Stearic acid: a product of NOF Corporation
Antioxidant 2: NOCRAC 224 (polymerized 2,2,4-trimethyl-1,2-dihydroquinoline) available from Ouchi Shinko Chemical Industrial Co., Ltd.
Zinc oxide: zinc oxide #3 available from Hakusui Tech Co., Ltd.
Sulfur: powdered sulfur available from Tsurumi Chemical Industry Co., Ltd.
Vulcanization accelerator 2: NOCCELER DZ (N,N-dicyclohexyl-2-benzothiazolylsulfenamide, DCBS) available from Ouchi Shinko Chemical Industrial Co., Ltd.

[Table 1]

[Table 1]

| | | Example | | | | | | | | | | | |
|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 |
| Specification | Band cord material | PET | PET | PET | PET | PET | PET | PET | PET | PET | PET | PET | PET |
| | Band cord structure | 1100 dtex/2 | 1100 dtex/2 | 1100 dtex/2 | 1100 dtex/2 | 1100 dtex/2 | 1100 dtex/2 | 1100 dtex/2 | 1100 dtex/2 | 1100 dtex/2 | 1100 dtex/2 | 1100 dtex/2 | 1100 dtex/2 |
| | Total fineness (tex) of band cord | 220 | 220 | 220 | 220 | 220 | 220 | 220 | 220 | 220 | 220 | 220 | 220 |
| | Twist number (t/10 cm) of band cord | 60 | 60 | 60 | 60 | 60 | 60 | 60 | 60 | 60 | 60 | 60 | 60 |
| | Residual strain E (%) | 4.5 | 3.8 | 4.8 | 4.5 | 4.5 | 4.5 | 2.6 | 2.8 | 2.6 | 2.6 | 2.6 | 2.6 |
| | Slope d (cN/(tex · %)) | 3.6 | 3.1 | 4.0 | 5.4 | 3.6 | 3.6 | 2.7 | 2.8 | 2.7 | 2.7 | 2.7 | 2.7 |
| | Stress Lf (cN/tex) at 2.5% elongation at 25°C | 9.7 | 9.7 | 9.7 | 20.1 | 9.7 | 9.7 | 9.7 | 9.7 | 9.7 | 9.7 | 9.7 | 9.7 |
| | Stress Hf (cN/tex) at 5.0% elongation at 25°C | 22.7 | 22.7 | 22.7 | 39.2 | 22.7 | 22.7 | 22.7 | 22.7 | 22.7 | 22.7 | 22.7 | 22.7 |
| | End count (ends/50 mm) of band cord | 50 | 50 | 50 | 50 | 50 | 50 | 50 | 50 | 50 | 50 | 50 | 50 |
| | tanδt of cap tread | 0.23 | 0.23 | 0.13 | 0.23 | 0.30 | 0.17 | 0.23 | 0.23 | 0.23 | 0.23 | 0.23 | 0.23 |
| | E×d/tan δt | 70 | 51 | 148 | 106 | 54 | 95 | 31 | 34 | 31 | 31 | 31 | 31 |
| | Thickness Tt (mm) of tread portion | 10.5 | 10.5 | 10.5 | 10.5 | 10.5 | 10.5 | 10.5 | 10.5 | 16.0 | 18.5 | 10.5 | 10.5 |
| | Thickness Tb (mm) of band layer | 0.70 | 0.70 | 0.70 | 0.70 | 0.70 | 0.70 | 0.70 | 0.70 | 0.70 | 0.70 | 0.88 | 0.95 |
| | E×d/Tt | 1.54 | 1.12 | 1.83 | 2.31 | 1.54 | 1.54 | 0.67 | 0.75 | 0.44 | 0.38 | 0.67 | 0.67 |
| | E×d/Tb | 23.1 | 16.8 | 27.4 | 34.7 | 23.1 | 23.1 | 10.0 | 11.2 | 10.0 | 10.0 | 8.0 | 7.4 |
| | Groove depth D (mm) of circumferential groove | 8.5 | 8.5 | 8.5 | 8.5 | 8.5 | 8.5 | 8.5 | 8.5 | 12.8 | 14.8 | 8.5 | 8.5 |
| | E×d/D | 1.91 | 1.39 | 2.26 | 2.86 | 1.91 | 1.91 | 0.83 | 0.92 | 0.55 | 0.47 | 0.83 | 0.83 |
| | Tt/Lf | 1.08 | 1.08 | 1.08 | 0.52 | 1.08 | 1.08 | 1.08 | 1.08 | 1.65 | 1.91 | 1.08 | 1.08 |
| | Tt/Hf | 0.46 | 0.46 | 0.46 | 0.27 | 0.46 | 0.46 | 0.46 | 0.46 | 0.70 | 0.81 | 0.46 | 0.46 |
| | Negative ratio S (%) | 30 | 30 | 30 | 30 | 30 | 30 | 30 | 30 | 30 | 30 | 30 | 30 |
| | E×d/S | 0.54 | 0.39 | 0.64 | 0.81 | 0.54 | 0.54 | 0.23 | 0.26 | 0.23 | 0.23 | 0.23 | 0.23 |
| | Amount Ft (parts by mass) of fillers in cap tread | 70 | 65 | 65 | 65 | 75 | 75 | 65 | 65 | 65 | 65 | 65 | 65 |
| | E×d/Ft | 0.23 | 0.18 | 0.30 | 0.37 | 0.22 | 0.22 | 0.11 | 0.12 | 0.11 | 0.11 | 0.11 | 0.11 |
| | Amount Fb (parts by mass) of fillers in band layer | 50 | 50 | 50 | 50 | 50 | 50 | 50 | 50 | 50 | 50 | 50 | 50 |
| | E×d/Fb | 0.32 | 0.24 | 0.38 | 0.49 | 0.32 | 0.32 | 0.14 | 0.16 | 0.14 | 0.14 | 0.14 | 0.14 |
| | Acetone extractable content AEt (% by mass) of cap tread | 15 | 15 | 12 | 15 | 17 | 14 | 15 | 15 | 15 | 15 | 15 | 15 |
| | E×d/AEt | 1.1 | 0.8 | 1.6 | 1.6 | 1.0 | 1.2 | 0.5 | 0.5 | 0.5 | 0.5 | 0.5 | 0.5 |
| | Acetone extractable content AEb (% by mass) of coating rubber in band layer | 6.0 | 6.0 | 6.0 | 6.0 | 6.0 | 6.0 | 6.0 | 6.0 | 6.0 | 6.0 | 6.0 | 6.0 |
| | E×d/AEb | 2.7 | 1.9 | 3.2 | 4.0 | 2.7 | 2.7 | 1.2 | 1.3 | 1.2 | 1.2 | 1.2 | 1.2 |
| Cap tread compound (parts by mass) | SBR | 85 | 85 | 85 | 85 | 85 | 85 | 85 | 85 | 85 | 85 | 85 | 85 |
| | BR | 15 | 15 | 15 | 15 | 15 | 15 | 15 | 15 | 15 | 15 | 15 | 15 |
| | Silica | 20 | 20 | 55 | 20 | 20 | 60 | 20 | 20 | 20 | 20 | 20 | 20 |
| | Carbon black 1 | 50 | 45 | 10 | 45 | 55 | 15 | 45 | 45 | 45 | 45 | 45 | 45 |
| | Oil | 15 | 15 | 5 | 15 | 20 | 10 | 15 | 15 | 15 | 15 | 15 | 15 |
| | Silane coupling agent | 2 | 2 | 5 | 2 | 2 | 5 | 2 | 2 | 2 | 2 | 2 | 2 |
| | Antioxidant 1 | 2 | 2 | 2 | 2 | 2 | 2 | 2 | 2 | 2 | 2 | 2 | 2 |
| | Antioxidant 2 | 1 | 1 | 1 | 1 | 1 | 1 | 1 | 1 | 1 | 1 | 1 | 1 |
| | Wax | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 |
| | Sulfur | 1 | 1 | 1 | 1 | 1 | 1 | 1 | 1 | 1 | 1 | 1 | 1 |
| | Vulcanization accelerator 1 | 2 | 2 | 2 | 2 | 2 | 2 | 2 | 2 | 2 | 2 | 2 | 2 |
| | Vulcanization accelerator 2 | 0.5 | 0.5 | 0.5 | 0.5 | 0.5 | 0.5 | 0.5 | 0.5 | 0.5 | 0.5 | 0.5 | 0.5 |
| Band layer coating rubber compound (parts by mass) | NR | 70 | 70 | 70 | 70 | 70 | 70 | 70 | 70 | 70 | 70 | 70 | 70 |
| | SBR | 30 | 30 | 30 | 30 | 30 | 30 | 30 | 30 | 30 | 30 | 30 | 30 |
| | Carbon black 2 | 50 | 50 | 50 | 50 | 50 | 50 | 50 | 50 | 50 | 50 | 50 | 50 |
| | Oil | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 |
| | Antioxidant 2 | 1 | 1 | 1 | 1 | 1 | 1 | 1 | 1 | 1 | 1 | 1 | 1 |
| | Zinc oxide | 5 | 5 | 5 | 5 | 5 | 5 | 5 | 5 | 5 | 5 | 5 | 5 |
| | Sulfur | 3 | 3 | 3 | 3 | 3 | 3 | 3 | 3 | 3 | 3 | 3 | 3 |
| | Vulcanization accelerator 2 | 1 | 1 | 1 | 1 | 1 | 1 | 1 | 1 | 1 | 1 | 1 | 1 |
| Evaluation | Durability during high-speed driving (index) | 131 | 117 | 163 | 115 | 106 | 147 | 111 | 115 | 108 | 104 | 116 | 112 |

[Table 2]

[Table 2]

| | | Example | | | | | | | | | | | | |
| | | 1-13 | 1-14 | 1-15 | 1-16 | 1-17 | 1-18 | 1-19 | 1-20 | 1-21 | 1-22 | 1-23 | 1-24 |
| Specification | Band cord material | PET | PET | PET | PET | PET | PET | PET | PET | PET | PET | PET | PET |
| | Band cord structure | 1100 dtex/2 | 1100 dtex/2 | 1100 dtex/2 | 1100 dtex/2 | 1100 dtex/2 | 1100 dtex/2 | 1100 dtex/2 | 1100 dtex/2 | 1100 dtex/2 | 1100 dtex/2 | 1100 dtex/2 | 1100 dtex/2 |
| | Total fineness (tex) of band cord | 220 | 220 | 220 | 220 | 220 | 220 | 220 | 220 | 220 | 220 | 220 | 220 |
| | Twist number (t/10 cm) of band cord | 60 | 60 | 60 | 60 | 60 | 60 | 60 | 60 | 60 | 60 | 60 | 60 |
| | Residual strain E (%) | 2.6 | 2.6 | 4.5 | 4.5 | 4.5 | 4.5 | 2.6 | 2.6 | 2.6 | 2.6 | 2.6 | 2.6 |
| | Slope d (cN/(tex · %)) | 2.7 | 2.7 | 5.4 | 5.4 | 5.4 | 5.4 | 2.7 | 2.7 | 2.7 | 2.7 | 2.7 | 2.7 |
| | Stress Lf (cN/tex) at 2.5% elongation at 25°C | 9.7 | 9.7 | 20.1 | 20.1 | 18.3 | 18.3 | 9.7 | 9.7 | 9.7 | 9.7 | 9.7 | 9.7 |
| | Stress Hf (cN/tex) at 5.0% elongation at 25°C | 22.7 | 22.7 | 39.2 | 39.2 | 36.0 | 36.0 | 22.7 | 22.7 | 22.7 | 22.7 | 22.7 | 22.7 |
| | End count (ends/50 mm) of band cord | 50 | 50 | 50 | 50 | 50 | 50 | 50 | 50 | 50 | 50 | 50 | 50 |
| | tanδt of cap tread | 0.23 | 0.23 | 0.23 | 0.23 | 0.23 | 0.23 | 0.23 | 0.23 | 0.23 | 0.24 | 0.23 | 0.23 |
| | E×d/tanδt | 31 | 31 | 106 | 106 | 106 | 106 | 31 | 31 | 31 | 29 | 31 | 31 |
| | Thickness Tt (mm) of tread portion | 15.6 | 18.0 | 8.5 | 7.0 | 8.5 | 7.0 | 10.5 | 10.5 | 10.5 | 10.5 | 10.5 | 10.5 |
| | Thickness Tb (mm) of band layer | 0.70 | 0.70 | 0.70 | 0.70 | 0.70 | 0.70 | 0.70 | 0.70 | 0.70 | 0.70 | 0.70 | 0.70 |
| | E×d/Tt | 0.45 | 0.39 | 2.86 | 3.47 | 2.86 | 3.47 | 0.67 | 0.67 | 0.67 | 0.67 | 0.67 | 0.67 |
| | E×d/Tb | 10.0 | 10.0 | 34.7 | 34.7 | 34.7 | 34.7 | 10.0 | 10.0 | 10.0 | 10.0 | 10.0 | 10.0 |
| | Groove depth D (mm) of circumferential groove | 12.5 | 14.4 | 6.8 | 5.6 | 6.8 | 5.6 | 8.5 | 8.5 | 8.5 | 8.5 | 8.5 | 8.5 |
| | E×d/D | 0.56 | 0.49 | 3.57 | 4.34 | 3.57 | 4.34 | 0.83 | 0.83 | 0.83 | 0.83 | 0.83 | 0.83 |
| | T/Lf | 1.61 | 1.86 | 0.42 | 0.35 | 0.46 | 0.38 | 1.08 | 1.08 | 1.08 | 1.08 | 1.08 | 1.08 |
| | Tl/Hf | 0.69 | 0.79 | 0.22 | 0.18 | 0.24 | 0.19 | 0.46 | 0.46 | 0.46 | 0.46 | 0.46 | 0.46 |
| | Negative ratio S (%) | 30 | 30 | 30 | 30 | 30 | 30 | 35 | 45 | 30 | 30 | 30 | 30 |
| | E×d/S | 0.23 | 0.23 | 0.81 | 0.81 | 0.81 | 0.81 | 0.20 | 0.16 | 0.23 | 0.23 | 0.23 | 0.23 |
| | Amount Ft (parts by mass) of fillers in cap tread | 65 | 65 | 65 | 65 | 65 | 65 | 65 | 65 | 65 | 110 | 65 | 65 |
| | E×d/Ft | 0.11 | 0.11 | 0.37 | 0.37 | 0.37 | 0.37 | 0.11 | 0.11 | 0.11 | 0.06 | 0.11 | 0.11 |
| | Amount Fb (parts by mass) of fillers in band layer | 50 | 50 | 50 | 50 | 50 | 50 | 50 | 50 | 50 | 50 | 60 | 74 |
| | E×d/Fb | 0.14 | 0.14 | 0.49 | 0.49 | 0.49 | 0.49 | 0.14 | 0.14 | 0.14 | 0.14 | 0.12 | 0.09 |
| | Acetone extractable content AEt (% by mass) of cap tread | 15 | 15 | 15 | 15 | 15 | 15 | 15 | 15 | 15 | 15 | 15 | 15 |
| | E×d/AEt | 0.5 | 0.5 | 1.6 | 1.6 | 1.6 | 1.6 | 0.5 | 0.5 | 0.5 | 0.5 | 0.5 | 0.5 |
| | Acetone extractable content AEb (% by mass) of coating rubber in band layer | 6.0 | 6.0 | 6.0 | 6.0 | 6.0 | 6.0 | 6.0 | 6.0 | 6.0 | 6.0 | 7.5 | 8.7 |
| | E×d/AEb | 1.2 | 1.2 | 4.0 | 4.0 | 4.0 | 4.0 | 1.2 | 1.2 | 1.2 | 1.2 | 0.9 | 0.8 |
| Cap tread compound (parts by mass) | SBR | 85 | 85 | 85 | 85 | 85 | 85 | 85 | 85 | 85 | 85 | 85 | 85 |
| | BR | 15 | 15 | 15 | 15 | 15 | 15 | 15 | 15 | 15 | 15 | 15 | 15 |
| | Silica | 20 | 20 | 20 | 20 | 20 | 20 | 20 | 20 | 20 | 100 | 20 | 20 |
| | Carbon black 1 | 45 | 45 | 45 | 45 | 45 | 45 | 45 | 45 | 45 | 10 | 45 | 45 |
| | Oil | 15 | 15 | 15 | 15 | 15 | 15 | 15 | 15 | 15 | 20 | 15 | 15 |
| | Silane coupling agent | 2 | 2 | 2 | 2 | 2 | 2 | 2 | 2 | 2 | 2 | 2 | 2 |
| | Antioxidant 1 | 2 | 2 | 2 | 2 | 2 | 2 | 2 | 2 | 2 | 1 | 1 | 1 |
| | Antioxidant 2 | 1 | 1 | 1 | 1 | 1 | 1 | 1 | 1 | 1 | 2 | 2 | 2 |
| | Wax | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 1 | 1 | 1 |
| | Zinc oxide | 1 | 1 | 1 | 1 | 1 | 1 | 1 | 1 | 1 | 2 | 2 | 2 |
| | Sulfur | 2 | 2 | 2 | 2 | 2 | 2 | 2 | 2 | 2 | 2 | 2 | 2 |
| | Vulcanization accelerator 1 | 1 | 1 | 1 | 1 | 1 | 1 | 1 | 1 | 1 | 1 | 1 | 1 |
| | Vulcanization accelerator 2 | 0.5 | 0.5 | 0.5 | 0.5 | 0.5 | 0.5 | 0.5 | 0.5 | 0.5 | 0.5 | 0.5 | 0.5 |
| Band layer coating rubber compound (parts by mass) | NR | 70 | 70 | 70 | 70 | 70 | 70 | 70 | 70 | 70 | 70 | 70 | 70 |
| | SBR | 30 | 30 | 30 | 30 | 30 | 30 | 30 | 30 | 30 | 30 | 30 | 30 |
| | Carbon black 2 | 50 | 50 | 50 | 50 | 50 | 50 | 50 | 50 | 50 | 50 | 60 | 74 |
| | Oil | 2 | 2 | 2 | 2 | 2 | 2 | 2 | 2 | 2 | 2 | 5 | 8 |
| | Stearic acid | 2 | 2 | 2 | 2 | 2 | 2 | 2 | 2 | 2 | 2 | 2 | 2 |
| | Antioxidant 2 | 1 | 1 | 1 | 1 | 1 | 1 | 1 | 1 | 1 | 1 | 1 | 1 |
| | Zinc oxide | 5 | 5 | 5 | 5 | 5 | 5 | 5 | 5 | 5 | 5 | 5 | 5 |
| | Sulfur | 3 | 3 | 3 | 3 | 3 | 3 | 3 | 3 | 3 | 3 | 3 | 3 |
| | Vulcanization accelerator 2 | 1 | 1 | 1 | 1 | 1 | 1 | 1 | 1 | 1 | 1 | 1 | 1 |
| Evaluation | Durability during high-speed driving (index) | 110 | 106 | 117 | 110 | 118 | 112 | 113 | 109 | 112 | 108 | 112 | 107 |

28

[Table 3]

| | | | Comparative Example | | | | |
|---|---|---|---|---|---|---|---|
| | | | 1-1 | 1-2 | 1-3 | 1-4 | 1-5 |
| Specification | | Band cord material | PET | PET | PET | PET | PET |
| | | Band cord structure | 1100 dtex/2 | 1100 dtex/2 | 1100 dtex/2 | 1100 dtex/2 | 1100 dtex/2 |
| | | Total fineness (tex) of band cord | 220 | 220 | 220 | 220 | 220 |
| | | Twist number (t/10 cm) of band cord | 60 | 60 | 60 | 60 | 60 |
| | | Residual strain E (%) | 4.5 | 1.5 | 1.5 | 4.6 | 1.5 |
| | | Slope d (cN/(tex · %)) | 3.6 | 4.0 | 4.0 | 3.8 | 4.0 |
| | | Stress Lf (cN/tex) at 2.5% elongation at 25°C | 9.7 | 9.7 | 9.7 | 9.7 | 9.7 |
| | | Stress Hf (cN/tex) at 5.0% elongation at 25°C | 22.7 | 22.7 | 22.7 | 22.7 | 22.7 |
| | | End count (ends/50 mm) of band cord | 50 | 50 | 50 | 50 | 50 |
| | | tanōt of cap tread | 0.60 | 0.23 | 0.60 | 0.65 | 0.12 |
| | | E×d/tanōt | 27 | 26 | 10 | 27 | 50 |
| | | Thickness Tt (mm) of tread portion | 10.5 | 10.5 | 10.5 | 10.5 | 10.5 |
| | | Thickness Tb (mm) of band layer | 0.70 | 0.70 | 0.70 | 0.70 | 0.70 |
| | | E×d/Tt | 1.54 | 0.57 | 0.57 | 1.66 | 0.57 |
| | | E×d/Tb | 23.1 | 8.6 | 8.6 | 25.0 | 8.6 |
| | | Groove depth D (mm) of circumferential groove | 8.5 | 8.5 | 8.5 | 8.5 | 8.5 |
| | | E×d/D | 1.91 | 0.71 | 0.71 | 2.06 | 0.71 |
| | | Tt/Lf | 1.08 | 1.08 | 1.08 | 1.08 | 1.08 |
| | | Tt/Hf | 0.46 | 0.46 | 0.46 | 0.46 | 0.46 |
| | | Negative ratio S (%) | 30 | 30 | 30 | 30 | 30 |
| | | E×d/S | 0.54 | 0.20 | 0.20 | 0.58 | 0.20 |
| | | Amount Ft (parts by mass) of fillers in cap tread | 85 | 65 | 100 | 90 | 55 |
| | | E×d/Ft | 0.19 | 0.09 | 0.06 | 0.19 | 0.11 |
| | | Amount Fb (parts by mass) of fillers in band layer | 50 | 50 | 50 | 50 | 50 |
| | | E×d/Fb | 0.32 | 0.12 | 0.12 | 0.35 | 0.12 |
| | | Acetone extractable content AEt (% by mass) of cap tread | 16 | 15 | 15 | 17 | 12 |
| | | E×d/AEt | 1.0 | 0.4 | 0.4 | 1.0 | 0.5 |
| | | Acetone extractable content AEb (% by mass) of coating rubber in band layer | 6.0 | 6.0 | 6.0 | 6.0 | 6.0 |
| | | E×d/AEb | 2.7 | 1.0 | 1.0 | 2.9 | 1.0 |
| Cap tread compound (parts by mass) | | SBR | 85 | 85 | 85 | 85 | 85 |
| | | BR | 15 | 15 | 15 | 15 | 15 |
| | | Silica | 5 | 20 | 20 | 5 | 50 |
| | | Carbon black 1 | 80 | 45 | 80 | 85 | 5 |
| | | Oil | 20 | 15 | 20 | 22 | 5 |
| | | Silane coupling agent | 1 | 2 | 2 | 2 | 4 |
| | | Antioxidant 1 | 2 | 2 | 2 | 2 | 2 |
| | | Antioxidant 2 | 1 | 1 | 1 | 1 | 1 |
| | | Wax | 2 | 2 | 2 | 2 | 2 |
| | | Stearic acid | 2 | 2 | 2 | 2 | 2 |
| | | Zinc oxide | 2 | 2 | 2 | 2 | 2 |
| | | Sulfur | 1 | 1 | 1 | 1 | 1 |
| | | Vulcanization accelerator 1 | 2 | 2 | 2 | 2 | 2 |
| | | Vulcanization accelerator 2 | 0.5 | 0.5 | 0.5 | 0.5 | 0.5 |
| Band layer coating rubber compound (parts by mass) | | NR | 70 | 70 | 70 | 70 | 70 |
| | | SBR | 30 | 30 | 30 | 30 | 30 |
| | | Carbon black 2 | 50 | 50 | 50 | 50 | 50 |
| | | Oil | 2 | 2 | 2 | 2 | 2 |
| | | Stearic acid | 2 | 2 | 2 | 2 | 2 |
| | | Antioxidant 2 | 1 | 1 | 1 | 1 | 1 |
| | | Zinc oxide | 5 | 5 | 5 | 5 | 5 |
| | | Sulfur | 3 | 3 | 3 | 3 | 3 |
| | | Vulcanization accelerator 2 | 1 | 1 | 1 | 1 | 1 |
| Evaluation | | Durability during high-speed driving (index) | 100 | 97 | 72 | 99 | 99 |

[Table 4]

| | | Example | Comparative Example |
|---|---|---|---|
| | | 2-1 | 2-1 |
| Specification | Band cord material | PET | PET |
| | Band cord structure | 1100 dtex/2 | 1100 dtex/2 |
| | Total fineness (tex) of band cord | 220 | 220 |
| | Twist number (t/10 cm) of band cord | 50 | 50 |
| | Residual strain E (%) | 3.5 | 3.5 |
| | Slope d (cN/(tex · %)) | 2.6 | 2.6 |
| | Stress Lf (cN/tex) at 2.5% elongation at 25℃ | 9.7 | 9.7 |
| | Stress Hf (cN/tex) at 5.0% elongation at 25℃ | 22.7 | 22.7 |
| | End count (ends/50 mm) of band cord | 50 | 50 |
| | tanδt of cap tread | 0.26 | 0.50 |
| | E×d/tanδt | 35 | 18 |
| | Thickness Tt (mm) of tread portion | 10.5 | 10.5 |
| | Thickness Tb (mm) of band layer | 0.70 | 0.70 |
| | E×d/Tt | 0.87 | 0.87 |
| | E×d/Tb | 13.0 | 13.0 |
| | Groove depth D (mm) of circumferential groove | 8.5 | 8.5 |
| | E×d/D | 1.07 | 1.07 |
| | Tt/Lf | 1.08 | 1.08 |
| | Tt/Hf | 0.46 | 0.46 |
| | Negative ratio S (%) | 30 | 30 |
| | E×d/S | 0.30 | 0.30 |
| | Amount Ft (parts by mass) of fillers in cap tread | 70 | 65 |
| | E×d/Ft | 0.13 | 0.14 |
| | Amount Fb (parts by mass) of fillers in band layer | 60 | 60 |
| | E×d/Fb | 0.15 | 0.15 |
| | Acetone extractable content AEt (% by mass) of cap tread | 15 | 15 |
| | E×d/AEt | 0.6 | 0.6 |
| | Acetone extractable content AEb (% by mass) of coating rubber in band layer | 5.5 | 5.5 |
| | E×d/AEb | 1.7 | 1.7 |
| Cap tread compound (parts by mass) | SBR | 85 | 85 |
| | BR | 15 | 15 |
| | Silica | 20 | 20 |
| | Carbon black 1 | 50 | 45 |
| | Oil | 15 | 15 |
| | Silane coupling agent | 2 | 2 |
| | Antioxidant 1 | 2 | 2 |
| | Antioxidant 2 | 1 | 1 |
| | Wax | 2 | 2 |
| | Stearic acid | 2 | 2 |
| | Zinc oxide | 2 | 2 |
| | Sulfur | 1 | 1 |
| | Vulcanization accelerator 1 | 2 | 2 |
| | Vulcanization accelerator 2 | 0.5 | 0.5 |
| Band layer coating rubber compound (parts by mass) | NR | 100 | 100 |
| | SBR | | |
| | Carbon black 2 | 60 | 60 |
| | Oil | 2 | 2 |
| | Stearic acid | 1.5 | 1.5 |
| | Antioxidant 2 | 1 | 1 |
| | Zinc oxide | 10 | 10 |
| | Sulfur | 6 | 6 |
| | Vulcanization accelerator 2 | 1 | 1 |
| Evaluation | Durability during high-speed driving (index) | 123 | 100 |

[Table 5]

| | | Example | Comparative Example |
|---|---|---|---|
| | | 3-1 | 3-1 |
| Specification | Band cord material | PET | PET |
| | Band cord structure | 1440 dtex/2 | 1440 dtex/2 |
| | Total fineness (tex) of band cord | 288 | 288 |
| | Twist number (t/10 cm) of band cord | 48 | 48 |
| | Residual strain E (%) | 2.5 | 2.5 |
| | Slope d (cN/(tex · %)) | 2.1 | 2.1 |
| | Stress Lf (cN/tex) at 2.5% elongation at 25℃ | 9.7 | 9.7 |
| | Stress Hf (cN/tex) at 5.0% elongation at 25℃ | 22.7 | 22.7 |
| | End count (ends/50 mm) of band cord | 45 | 45 |
| | tan$\delta$t of cap tread | 0.17 | 0.45 |
| | E×d/tan$\delta$t | 31 | 12 |
| | Thickness Tt (mm) of tread portion | 10.5 | 10.5 |
| | Thickness Tb (mm) of band layer | 0.70 | 0.70 |
| | E×d/Tt | 0.50 | 0.50 |
| | E×d/Tb | 7.5 | 7.5 |
| | Groove depth D (mm) of circumferential groove | 8.5 | 8.5 |
| | E×d/D | 0.62 | 0.62 |
| | Tt/Lf | 1.08 | 1.08 |
| | Tt/Hf | 0.46 | 0.46 |
| | Negative ratio S (%) | 30 | 30 |
| | E×d/S | 0.18 | 0.18 |
| | Amount Ft (parts by mass) of fillers in cap tread | 70 | 65 |
| | E×d/Ft | 0.08 | 0.08 |
| | Amount Fb (parts by mass) of fillers in band layer | 60 | 60 |
| | E×d/Fb | 0.09 | 0.09 |
| | Acetone extractable content AEt (% by mass) of cap tread | 15 | 15 |
| | E×d/AEt | 0.3 | 0.3 |
| | Acetone extractable content AEb (% by mass) of coating rubber in band layer | 5.5 | 5.5 |
| | E×d/AEb | 1.0 | 1.0 |
| Cap tread compound (parts by mass) | SBR | 85 | 85 |
| | BR | 15 | 15 |
| | Silica | 20 | 20 |
| | Carbon black 1 | 50 | 45 |
| | Oil | 15 | 15 |
| | Silane coupling agent | 2 | 2 |
| | Antioxidant 1 | 2 | 2 |
| | Antioxidant 2 | 1 | 1 |
| | Wax | 2 | 2 |
| | Stearic acid | 2 | 2 |
| | Zinc oxide | 2 | 2 |
| | Sulfur | 1 | 1 |
| | Vulcanization accelerator 1 | 2 | 2 |
| | Vulcanization accelerator 2 | 0.5 | 0.5 |
| Band layer coating rubber compound (parts by mass) | NR | 100 | 100 |
| | SBR | | |
| | Carbon black 2 | 60 | 60 |
| | Oil | 2 | 2 |
| | Stearic acid | 1.5 | 1.5 |
| | Antioxidant 2 | 1 | 1 |
| | Zinc oxide | 10 | 10 |
| | Sulfur | 6 | 6 |
| | Vulcanization accelerator 2 | 1 | 1 |
| Evaluation | Durability during high-speed driving (index) | 130 | 100 |

REFERENCE SIGNS LIST

2 tire
4 tread portion
6 sidewall
8 wing
10 clinch
12 bead
14 carcass
16 belt layer
17 belt ply
17A belt cord
17B topping rubber (coating rubber)
18 band layer
18A polyethylene terephthalate fiber cord
18B reinforcing rubber coating polyethylene terephthalate fiber cord
20 innerliner
22 chafer
26 groove
28 base layer
30 cap layer
32 bead core
34 bead apex
36 carcass ply
36a main portion
36b folded portion
38 interior layer
40 exterior layer
42 main groove
44 rib
CL tire equator
Tt thickness of tread portion
Tb thickness of band layer
D groove depth of circumferential groove

## Claims

1. A tire (2), comprising:

   a cap tread (30); and
   a band layer (18) containing a polyethylene terephthalate fiber cord (18A),
   **characterized in that**
   the polyethylene terephthalate fiber cord (18A) in the band layer (18) having a residual strain E in the band layer (18) of 2.0% or higher,
   the polyethylene terephthalate fiber cord (18A) taken out of the band layer (18) having a stress-strain curve at 100°C in which a slope d at the residual strain E in the band layer (18) is 2.0 cN/(tex·%) or greater,
   the tire (2) satisfying the following relationship (1):

$$(1) \quad E \times d / \tan \delta t > 30$$

   where E (%) is the residual strain as defined above, d (cN/(tex·%)) is the slope as defined above, and tan δt is a loss tangent of the cap tread (30) measured at a temperature of 30°C, an initial strain of 10%, a dynamic strain of 1%, and a frequency of 10 Hz in extension mode.

2. The tire (2) according to claim 1,
   wherein the polyethylene terephthalate fiber cord (18A) taken out of the band layer (18) has a stress at 2.5% elongation at 25°C of 18 cN/tex or less and a stress at 5.0% elongation at 25°C of 33 cN/tex or less.

3. The tire (2) according to claim 1 or 2,

32

wherein tanδt is less than 0.25.

4. The tire (2) according to any one of claims 1 to 3,
   wherein tanδt is less than 0.20.

5. The tire (2) according to any one of claims 1 to 4, which satisfies the following relationship:

$$E×d/tanδt > 32.$$

6. The tire (2) according to any one of claims 1 to 5, which satisfies the following relationship:

$$E×d/tanδt > 34.$$

7. The tire (2) according to any one of claims 1 to 6, which satisfies the following relationship:

$$E×d/Tt > 0.40$$

where E (%) is the residual strain as defined above, d (cN/(tex·%)) is the slope as defined above, and Tt (mm) is a thickness of a tread portion (4).

8. The tire (2) according to any one of claims 1 to 7, which satisfies the following relationship:

$$E×d/Tb > 7.8$$

where E (%) is the residual strain as defined above, d (cN/(tex·%)) is the slope as defined above, and Tb (mm) is a thickness of the band layer (18).

9. The tire (2) according to any one of claims 1 to 8, which satisfies the following relationship:

$$E×d/D > 0.55$$

where E (%) is the residual strain as defined above, d (cN/(tex·%)) is the slope as defined above, and D (mm) is a groove depth of a circumferential groove (26, 42) formed in a tread portion (4).

10. The tire (2) according to any one of claims 1 to 9, which satisfies the following relationship:

$$Tt/Lf > 0.38$$

where Tt (mm) is a thickness of a tread portion (4), and Lf is a stress at 2.5% elongation at 25°C of the polyethylene terephthalate fiber cord (18A) taken out of the band layer (18).

11. The tire (2) according to any one of claims 1 to 10, which satisfies the following relationship:

$$Tt/Hf > 0.21$$

where Tt (mm) is a thickness of a tread portion (4), and Hf is a stress at 5.0% elongation at 25°C of the polyethylene terephthalate fiber cord (18A) taken out of the band layer (18).

12. The tire (2) according to any one of claims 1 to 11, which satisfies the following relationship:

$$E×d/S > 0.17$$

where E (%) is the residual strain as defined above, d (cN/(tex·%)) is the slope as defined above, and S (%) is a negative ratio of a tread portion (4).

13. The tire (2) according to any one of claims 1 to 12, which satisfies the following relationship:

$$E \times d/Ft > 0.07$$

where E (%) is the residual strain as defined above, d (cN/(tex·%)) is the slope as defined above, and Ft (parts by mass) is an amount of fillers per 100 parts by mass of a rubber component content in the cap tread (30).

14. The tire (2) according to any one of claims 1 to 13, which satisfies the following relationship:

$$E \times d/Fb > 0.10$$

where E (%) is the residual strain as defined above, d (cN/(tex·%)) is the slope as defined above, and Fb (parts by mass) is an amount of fillers per 100 parts by mass of a rubber component content in a coating rubber (18B) in the band layer (18).

15. The tire (2) according to any one of claims 1 to 14, which satisfies the following relationship:

$$E \times d/AEt > 1.0$$

where E (%) is the residual strain as defined above, d (cN/(tex·%)) is the slope as defined above, and AEt (% by mass) is an acetone-extractable content of the cap tread (30).

16. The tire (2) according to any one of claims 1 to 15, which satisfies the following relationship:

$$E \times d/AEb > 2.3$$

where E (%) is the residual strain as defined above, d (cN/(tex·%)) is the slope as defined above, and AEb (% by mass) is an acetone-extractable content of a coating rubber (18B) in the band layer (18).

**Patentansprüche**

1. Reifen (2), umfassend:

   einen Decklaufstreifen (30); und
   eine Bandschicht (18), die einen Polyethylenterephthalat-Faser-Kord (18A) enthält,
   **dadurch gekennzeichnet, dass**
   der Polyethylenterephthalat-Faser-Kord (18A) in der Bandschicht (18) eine Restdehnung E in der Bandschicht (18) von 2,0% oder höher aufweist,
   der aus der Bandschicht (18) herausgenommene Polyethylenterephthalat-Faser-Kord (18A) eine Spannungs-DehnungsKurve bei 100°C aufweist, in der eine Steigung d bei der Restdehnung in der Bandschicht (18) 2,0 cN/(tex·%) oder größer ist,
   der Reifen (2) der folgenden Beziehung (1) genügt:

$$(1) \quad E \times d/\tan\delta t > 30$$

   worin E (%) die Restspannung wie oben definiert ist, d (cN/(tex·%)) die Steigung wie oben definiert ist, und tanδt ein Verlusttangens des Decklaufstreifens (30) ist, der bei einer Temperatur von 30°C, einer anfänglichen Dehnung von 10%, einer dynamischen Dehnung von 1% und einer Frequenz von 10 Hz in Streckmodus gemessen ist.

2. Reifen (2) nach Anspruch 1,
   wobei der aus der Bandschicht (18) herausgenommene Polyethylenterephthalat-Faser-Kord (18A) eine Spannung bei 2,5% Streckung bei 25°C von 18 cN/tex oder weniger und eine Spannung bei 5,0% Streckung bei 25°C von 33 cN/tex oder weniger aufweist.

3. Reifen (2) nach Anspruch 1 oder 2,
wobei $\tan\delta t$ weniger als 0,25 beträgt.

4. Reifen (2) nach einem der Ansprüche 1 bis 3,
wobei $\tan\delta t$ weniger als 0,20 beträgt.

5. Reifen (2) nach einem der Ansprüche 1 bis 4, welcher der folgenden Beziehung genügt:

$$E \times d / \tan\delta t > 32.$$

6. Reifen (2) nach einem der Ansprüche 1 bis 5, welcher der folgenden Beziehung genügt:

$$E \times d / \tan\delta t > 34.$$

7. Reifen (2) nach einem der Ansprüche 1 bis 6, welcher der folgenden Beziehung genügt:

$$E \times d / Tt > 0,40$$

worin E (%) die Restdehnung wie oben definiert ist, d (cN/(tex·%)) die Steigung wie oben definiert ist, und Tt (mm) eine Dicke eines Laufstreifenabschnitts (4) ist.

8. Reifen (2) nach einem der Ansprüche 1 bis 7, welcher der folgenden Beziehung genügt:

$$E \times d / Tb > 7,8$$

worin E (%) die Restdehnung wie oben definiert ist, d (cN/(tex·%)) die Steigung wie oben definiert ist, und Tb (mm) eine Dicke der Bandschicht (18) ist.

9. Reifen (2) nach einem der Ansprüche 1 bis 8, welcher der folgenden Beziehung genügt:

$$E \times d / D > 0,55$$

worin E (%) die Restdehnung wie oben definiert ist, d (cN/(tex·%)) die Steigung wie oben definiert ist, und D (mm) eine Rillentiefe einer in einem Laufstreifenabschnitt (4) gebildeten Umfangsrille (26, 42) ist.

10. Reifen (2) nach einem der Ansprüche 1 bis 9, welcher der folgenden Beziehung genügt:

$$Tt / Lf > 0,38$$

worin Tt (mm) eine Dicke eines Laufstreifenabschnitts (4) ist, und Lf eine Spannung bei 2,5% Streckung bei 25°C des aus der Bandschicht (18) herausgenommenen Polyethylenterephthalat-Faser-Kords (18A) ist.

11. Reifen (2) nach einem der Ansprüche 1 bis 10, welcher der folgenden Beziehung genügt:

$$Tt / Hf > 0,21$$

worin Tt (mm) eine Dicke eines Laufstreifenabschnitts (4) ist, und Hf eine Spannung bei 5,0% Streckung bei 25°C des aus der Bandschicht (18) herausgenommenen Polyethylenterephthalat-Faser-Kords (18A) ist.

12. Reifen (2) nach einem der Ansprüche 1 bis 11, welcher der folgenden Beziehung genügt:

$$E \times d / S > 0,17$$

worin E (%) die Restdehnung wie oben definiert ist, d (cN/(tex·%)) die Steigung wie oben definiert ist, und S (%) ein Negativanteil eines Laufstreifenabschnitts (4) ist.

13. Reifen (2) nach einem der Ansprüche 1 bis 12, welcher der folgenden Beziehung genügt:

$$E \times d/Ft > 0,07$$

worin E (%) die Restdehnung wie oben definiert ist, d (cN/(tex·%)) die Steigung wie oben definiert ist, und Ft (Massenteile) eine Menge an Füllstoffen pro 100 Massenteile eines Kautschukkomponentengehalts in dem Decklaufstreifen (30) ist.

14. Reifen (2) nach einem der Ansprüche 1 bis 13, welcher der folgenden Beziehung genügt:

$$E \times d/Fb > 0,10$$

worin E (%) die Restdehnung wie oben definiert ist, d (cN/(tex·%)) die Steigung wie oben definiert ist, und Fb (Massenteile) eine Menge an Füllstoffen pro 100 Massenteile eines Kautschukkomponentengehalts in einem Beschichtungskautschuk (18B) in der Bandschicht (18) ist.

15. Reifen (2) nach einem der Ansprüche 1 bis 14, welcher der folgenden Beziehung genügt:

$$E \times d/AEt > 1,0$$

worin E (%) die Restdehnung wie oben definiert ist, d (cN/(tex·%)) die Steigung wie oben definiert ist, und AEt (Massen-%) ein Acetonextrahierbarer Gehalt des Decklaufstreifens (30) ist.

16. Reifen (2) nach einem der Ansprüche 1 bis 15, welcher der folgenden Beziehung genügt:

$$E \times d/AEb > 2,3$$

worin E (%) die Restdehnung wie oben definiert ist, d (cN/(tex·%)) die Steigung wie oben definiert ist, und AEb (Massen-%) ein Acetonextrahierbarer Gehalt eines Beschichtungskautschuks (18B) in der Bandschicht (18) ist.

**Revendications**

1. Pneumatique (2), comprenant :

   une bande de roulement de coiffe (30) ; et
   une couche de bande (18) contenant une corde de fibre de téréphtalate de polyéthylène (18A),
   **caractérisé en ce que**
   la corde de fibre de téréphtalate de polyéthylène (18A) dans la couche de bande (18) ayant une contrainte résiduelle E dans la couche de bande (18) de 2,0 % ou plus,
   la corde de fibre de téréphtalate de polyéthylène (18A) prélevée de la couche de bande (18) ayant une courbe stress-contrainte à 100 °C dans laquelle une pente d à la contrainte résiduelle E dans la couche de bande (18) est de 2,0 cN / (tex · %) ou plus,
   le pneumatique (2) satisfaisant la relation suivante (1) :

$$(1) \quad E \times d/\tan\delta t > 30$$

   où E (%) est la contrainte résiduelle telle que définie ci-dessus,
   d (cN / (tex · %)) est la pente telle que définie ci-dessus et tanδt est une tangente de perte de la bande de roulement de coiffe (30) mesurée à une température de 30 °C, une contrainte initiale de 10 %, une contrainte dynamique de 1 %, et une fréquence de 10 Hz en mode d'extension.

2. Pneumatique (2) selon la revendication 1,

dans lequel la corde de fibre de téréphtalate de polyéthylène (18A) prélevée de la couche de bande (18) a un stress à l'élongation de 2,5 % à 25 °C de 18 cN/tex ou moins et un stress à l'élongation de 5,0 % à 25 °C de 33 cN/tex ou moins.

3. Pneumatique (2) selon la revendication 1 ou 2,
   dans lequel tanδt est de moins de 0,25.

4. Pneumatique (2) selon l'une quelconque des revendications 1 à 3,
   dans lequel tanδt est de moins de 0,20.

5. Pneumatique (2) selon l'une quelconque des revendications 1 à 4, qui satisfait la relation suivante :

$$E \times d / \tan\delta t > 32.$$

6. Pneumatique (2) selon l'une quelconque ds revendications 1 à 5, qui satisfait la relation suivante :

$$E \times d / \tan\delta t > 34.$$

7. Pneumatique (2) selon l'une quelconque des revendications 1 à 6, qui satisfait la relation suivante :

$$E \times d / Tt > 0,40$$

où E (%) est la contrainte résiduelle telle que définie ci-dessus,
d (cN / (tex · %)) est la pente telle que définie ci-dessus, et Tt (mm) est une épaisseur d'une portion de bande de roulement (4).

8. Pneumatique (2) selon l'une quelconque des revendications 1 à 7, qui satisfait la relation suivante :

$$E \times d / Tb > 7,8$$

où E (%) est la contrainte résiduelle telle que définie ci-dessus,
d (cN / (tex · %)) est la pente telle que définie ci-dessus, et Tb (mm) est une épaisseur de la couche de bande (18).

9. Pneumatique (2) selon l'une quelconque des revendications 1 à 8, qui satisfait la relation suivante :

$$E \times d / D > 0,55$$

où E (%) est la contrainte résiduelle telle que définie ci-dessus,
d (cN / (tex · %)) est la pente telle que définie ci-dessus, et D (mm) est une profondeur de rainure d'une rainure circonférentielle (26, 42) formée dans une portion de bande de roulement (4).

10. Pneumatique selon l'une quelconque des revendications 1 à 9, qui satisfait la relation suivante :

$$Tt / Lf > 0,38$$

où Tt (mm) est une épaisseur d'une portion de bande de roulement (4) et Lf est un stress à l'élongation de 2,5 % à 25 °C de la corde de fibre de téréphtalate de polyéthylène (18A) prélevée de la couche de bande (18).

11. Pneumatique selon l'une quelconque des revendications 1 à 10, qui satisfait la relation suivante :

$$Tt / Hf > 0,21$$

où Tt (mm) est une épaisseur d'une portion de la bande de roulement (4) et Hf est un stress à l'élongation de 5,0 % à 25 °C de la corde de fibre de téréphtalate de polyéthylène (18A) prélevée de la couche de bande (18).

**12.** Pneumatique (2) selon l'une quelconque des revendications 1 à 11, qui satisfait la relation suivante :

$$E \times d / S > 0,17$$

où E (%) est la contrainte résiduelle telle que définie ci-dessus,
d (cN / (tex · %)) est la pente telle que définie ci-dessus, et S (%) est un rapport négatif d'une portion de bande de roulement (4).

**13.** Pneumatique (2) selon l'une quelconque des revendications 1 à 12, qui satisfait la relation suivante :

$$E \times d / Ft > 0,07$$

où E (%) est la contrainte résiduelle telle que définie ci-dessus,
d (cN / (tex · %)) est la pente telle que définie ci-dessus, et Ft (parties en masse) est une quantité de charges par 100 parties en masse d'une teneur de composant de caoutchouc dans la bande de roulement de coiffe (30).

**14.** Pneumatique (2) selon l'une quelconque des revendications 1 à 13, qui satisfait la relation suivante :

$$E \times d / Fb > 0,10$$

où E (%) est la contrainte résiduelle telle que définie ci-dessus,
d (cN / (tex · %)) est la pente telle que définie ci-dessus et Fb (parties en masse) est une quantité de charges par 100 parties en masse d'une teneur de composant de caoutchouc dans un caoutchouc de revêtement (18B) dans la couche de bande (18).

**15.** Pneumatique (2) selon l'une quelconque des revendications 1 à 14, qui satisfait la relation suivante :

$$E \times d / AEt > 1,0$$

où E (%) est la contrainte résiduelle telle que définie ci-dessus,
d (cN / (tex · %)) est la pente telle que définie ci-dessus, et AEt (% en masse) est une teneur extractible à l'acétone de la bande de roulement de coiffe (30).

**16.** Pneumatique (2) selon l'une quelconque des revendications 1 à 15, qui satisfait la relation suivante :

$$E \times d / AEb > 2,3$$

où E (%) est la contrainte résiduelle telle que définie ci-dessus,
d (cN / (tex · %)) est la pente telle que définie ci-dessus et, AEb (% en masse) est une teneur extractible à l'acétone d'un caoutchouc de revêtement (18B) dans la couche de bande (18).

FIG.1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022266632 A1
- WO 2021065983 A1
- EP 1671813 A1
- DE 102010036760 A1
- JP S4811335 A

- US 4414370 A
- JP S596207 A
- JP H558005 B
- JP H1313522 A
- US 5010166 A

**Non-patent literature cited in the description**

- TREND. Toagosei Co., Ltd., 2000, vol. 3, 42-45